# EUROPEAN PATENT APPLICATION

(11) **EP 4 751 854 A1**
(43) Date of publication of application: **03.06.2026**
(21) Application number: 25210276.9
(22) Date of filing: 22.10.2025
(51) Int. Cl.: B25F 5/00, H02K 16/00, H02P 5/747

(54) **POWER TOOL**

(30) Priority: 01.11.2024 CN 202411556771; 01.11.2024 CN 202411553974; 01.11.2024 CN 202411556544; 01.11.2024 CN 202422667676 U
(71) Applicant: Nanjing Chervon Industry Co., Ltd., Nanjing, Jiangsu 211106 (CN)
(72) Inventor: LIU, Bing, Nanjing, Jiangsu 211106 (CN); WANG, Hailong, Nanjing, Jiangsu 211106 (CN); ZHOU, Yang, Nanjing, Jiangsu 211106 (CN); GAO, Hao, Nanjing, Jiangsu 211106 (CN)
(74) Representative: Sun, Yiming

(57) **Abstract**

A power tool includes a first electric motor including a first drive shaft rotating about a first axis; and a second electric motor including a second drive shaft rotating about a second axis; where torque of the first drive shaft and torque of the second drive shaft are output through an output shaft. The power tool includes switchable working modes, and the working modes include an adaptive mode configured such that a controller switches a running state of an electric motor assembly according to an identification result of a detector; and a first working mode configured such that the controller makes the first electric motor and the second electric motor jointly driven in response to an input instruction.

## Description

### TECHNICAL FIELD

This application relates to a power tool, for example, a power tool with multiple electric motors.

### BACKGROUND

In a related art, the load range of power tools usually covers a relatively wide torque and speed range. It is difficult for a single electric motor to ensure high efficiency over the entire torque and speed range during design. However, two electric motors with differentiated designs have high-efficiency operating points. When working in combination, the power tool can achieve high efficiency over the entire torque and speed range.

This part provides background information related to the present application, and the background information is not necessarily the existing art.

### SUMMARY

An object of the present application is to solve or at least alleviate part or all of the preceding problems. Therefore, an object of the present application is to provide a power tool that covers more operating conditions.

To achieve the preceding object, the present application adopts the technical solutions below.

A power tool includes an output shaft configured to output torque and rotating about an output axis; an electric motor assembly including at least a first electric motor and a second electric motor, the first electric motor including a first drive shaft rotating about a first axis, the second electric motor including a second drive shaft rotating about a second axis, and torque of the first drive shaft and torque of the second drive shaft being output through the output shaft; a power supply configured to supply operating power to the electric motor assembly; and a controller configured to control operation of the electric motor assembly. The power tool includes switchable working modes, and the working modes include an adaptive mode configured such that the controller switches a running state of the electric motor assembly according to an identification result of a detector, where the running state of the electric motor assembly includes that only the first electric motor or only the second electric motor is driven or that the first electric motor and the second electric motor are jointly driven; and a first working mode configured such that the controller makes the first electric motor and the second electric motor jointly driven in response to an input instruction.

In some examples, the working modes further include a second working mode configured such that the controller drives the first electric motor and brakes the second electric motor in response to an input instruction.

In some examples, a mode switching portion is further included, which is configured to receive a switching instruction input by a user and send a signal for executing the adaptive mode, the first working mode, or the second working mode.

In some examples, the mode switching portion includes a switching element configured to receive the switching instruction input by the user, and the switching element includes at least one of a mechanical switch or an electronic switch.

In some examples, a startup switch is further included, which is configured to be operated so that the electric motor assembly is energized, and the mode switching portion and the startup switch are different switching elements.

In some examples, the controller further includes a mode selection module configured to automatically switch a configured working mode of the power tool according to a parameter identification result.

In some examples, the mode selection module determines a load of the output shaft according to a physical quantity related to the running state of the electric motor assembly, and the controller determines running states of the first electric motor and the second electric motor according to the load of the output shaft.

In some examples, the power supply includes a battery pack, and the mode selection module determines a configured working mode of the power tool according to a physical quantity related to a running state of the battery pack.

In some examples, when the battery pack is determined to have a high output capability according to the physical quantity related to the running state of the battery pack, the controller is configured to determine that the power tool operates in the first working mode.

In some examples, when the battery pack is determined to have a medium output capability according to the physical quantity related to the running state of the battery pack, the controller is configured to determine that the power tool operates in the adaptive mode.

In some examples, when the battery pack is determined to have a low output capability according to the physical quantity related to the running state of the battery pack, the controller is configured to determine that the power tool operates in the second working mode.

In some examples, the power supply includes a battery pack, and the controller determines, according to a physical quantity related to a running state of the battery pack, whether to respond to a configuration signal of a working mode of the power tool.

In some examples, when the battery pack is determined to have a low output capability according to the physical quantity related to the running state of the battery pack, the controller is configured to respond only to a configuration signal of the second working mode.

In some examples, when the battery pack is determined to have a medium output capability according to the physical quantity related to the running state of the battery pack, the controller is configured not to respond to a configuration signal of the first working mode.

In some examples, the configuration signal includes a working mode configuration signal generated according to a switching instruction manually input by a user and a working mode configuration signal determined by the controller after identification of a preset physical quantity.

A power tool includes an output shaft configured to output torque and rotating about an output axis; an electric motor assembly including multiple electric motors with drive shafts, torque of multiple drive shafts being output through the output shaft; and a controller configured to control operation of the electric motor assembly. The power tool includes different working modes, and the working modes include an adaptive mode configured such that the controller switches a running state of the electric motor assembly according to an identification result of a detector, where the running state of the electric motor assembly includes that one or some of the multiple electric motors are driven or that all the multiple electric motors are jointly driven; and a selected mode configured such that the controller responds to an input instruction and determines operation of a selected electric motor corresponding to the input instruction according to the input instruction.

A power tool includes an output shaft configured to output torque and rotating about an output axis; an electric motor assembly including at least a first electric motor and a second electric motor, the first electric motor including a first drive shaft rotating about a first axis, the second electric motor including a second drive shaft rotating about a second axis, and torque of the first drive shaft and torque of the second drive shaft being output through the output shaft; and a controller configured to control operation of the electric motor assembly. The power tool includes switchable working modes, and the working modes include an adaptive mode configured such that the controller dynamically adjusts a running state of the electric motor assembly according to an identification result of a detector; and a selected mode configured such that the controller responds to an input instruction and determines operation of a selected electric motor corresponding to the input instruction according to the input instruction.

In some examples, a driver circuit is further included, which is disposed between a power supply and the electric motor assembly, is configured to drive the electric motor assembly, and includes multiple switching elements.

In some examples, the selected mode includes a first working mode configured such that the controller makes the first electric motor and the second electric motor jointly driven in response to the input instruction; and a second working mode configured such that the controller drives the first electric motor and brakes the second electric motor in response to the input instruction.

In some examples, when the second electric motor is in a braked state, the driver circuit connected to the second electric motor is in a non-conductive state, and power of the power supply is not supplied to the second electric motor.

In some examples, a driver circuit is further included, which is disposed between a power supply and the electric motor assembly, is configured to drive the electric motor assembly, and includes multiple switching elements.

In some examples, when the second electric motor is in a braked state, the driver circuit connected to the second electric motor is in a non-conductive state, and power of the power supply is not supplied to the second electric motor.

In some examples, when the power tool is in the adaptive mode, the controller determines, according to a relationship between a detected value of the detector and a preset threshold, that the second electric motor is driven or on standby.

In some examples, when the second electric motor is in a standby state, the second drive shaft outputs no torque.

In some examples, in the first working mode, the controller drives the first electric motor and the second electric motor to separately output maximum torque.

In some examples, the selected mode includes a first working mode configured such that the controller makes the first electric motor and the second electric motor jointly driven in response to the input instruction.

In some examples, the selected mode further includes a second working mode configured such that the controller drives the first electric motor and brakes the second electric motor according to preset drive parameters in response to the input instruction.

A power tool includes an output shaft configured to output torque and rotating about an output axis; an electric motor assembly including at least a first electric motor and a second electric motor, the first electric motor including a first drive shaft rotating about a first axis, the second electric motor including a second drive shaft rotating about a second axis, and torque of the first drive shaft and torque of the second drive shaft being output through the output shaft; a battery pack configured to supply electrical energy to the electric motor assembly; and a controller configured to control operation of the electric motor assembly. The controller is configured to determine running states of the first electric motor and the second electric motor according to a physical quantity related to a running state of the battery pack.

In some examples, the controller is configured to determine an output capability of the battery pack according to the physical quantity related to the running state of the battery pack.

In some examples, the power tool includes different working modes, the working modes include an adaptive mode, a first working mode, and a second working mode, and in the different working modes, the electric motor assembly is driven in at least partially different states.

In some examples, in the adaptive mode, the controller dynamically adjusts the running states of the first electric motor and the second electric motor; in the first working mode, the controller drives the first electric motor and the second electric motor to remain jointly driven; and in the second working mode, the controller drives the first electric motor and brakes the second electric motor.

In some examples, the controller further includes a mode selection module configured to determine a configured working mode of the power tool according to the physical quantity related to the running state of the battery pack.

In some examples, when the battery pack is determined to have a high output capability according to the physical quantity related to the running state of the battery pack, the controller is configured to determine that the power tool operates in the first working mode; when the battery pack is determined to have a medium output capability according to the physical quantity related to the running state of the battery pack, the controller is configured to determine that the power tool operates in the adaptive mode; and when the battery pack is determined to have a low output capability according to the physical quantity related to the running state of the battery pack, the controller is configured to determine that the power tool operates in the second working mode.

In some examples, the controller determines, according to the physical quantity related to the running state of the battery pack, whether to respond to a configuration signal of a working mode of the power tool.

In some examples, when the battery pack is determined to have a low output capability according to the physical quantity related to the running state of the battery pack, the controller is configured to respond only to a configuration signal of the second working mode; and when the battery pack is determined to have a medium output capability according to the physical quantity related to the running state of the battery pack, the controller is configured not to respond to a configuration signal of the first working mode.

In some examples, the configuration signal includes a working mode configuration signal generated according to a switching instruction manually input by a user and a working mode configuration signal determined by the controller after identification of a preset physical quantity.

In some examples, in the adaptive mode, the controller switches a running state of the electric motor assembly according to the output capability of the battery pack, where the running state of the electric motor assembly includes that the first electric motor or the second electric motor is driven or that the first electric motor and the second electric motor are jointly driven.

A power tool includes an output shaft configured to output torque and rotating about an output axis; an electric motor assembly including at least a first electric motor and a second electric motor, the first electric motor including a first drive shaft rotating about a first axis, the second electric motor including a second drive shaft rotating about a second axis, and torque of the first drive shaft and torque of the second drive shaft being output through the output shaft; a clutch assembly disposed between the first electric motor and the second electric motor and configured to allow or not allow at least one of the first drive shaft or the second drive shaft to drive the output shaft under a preset condition; and a controller configured to control operation of the electric motor assembly. The controller is configured to drive the first drive shaft of the first electric motor to rotate at a first rotational speed and when a second rotational speed of the second drive shaft of the second electric motor is lower than the first rotational speed, adjust a drive force parameter affecting a meshing force of the second electric motor on the clutch assembly according to a difference between the second rotational speed and the first rotational speed.

In some examples, when the difference between the second rotational speed and the first rotational speed is greater than or equal to a preset difference, the second electric motor increases the rotational speed according to a first drive force parameter corresponding to a first meshing force.

In some examples, when the difference between the second rotational speed and the first rotational speed is less than the preset difference, the second electric motor increases the rotational speed according to a second drive force parameter corresponding to a second meshing force, where the second meshing force is smaller than the first meshing force.

In some examples, the clutch assembly includes a one-way clutch driven by the meshing force of the second electric motor to mesh to allow the first drive shaft and the second drive shaft to jointly drive the output shaft.

In some examples, the second electric motor increases the rotational speed so that the clutch assembly allows the first drive shaft and the second drive shaft to jointly drive the output shaft.

In some examples, when the rotational speed of the second electric motor is lower than the first rotational speed, the first drive shaft drives the output shaft, and the clutch assembly prevents the second drive shaft from driving the output shaft.

In some examples, when the clutch assembly allows the first drive shaft and the second drive shaft to drive the output shaft, the second rotational speed is higher than or equal to the first rotational speed.

In some examples, the drive force parameter includes an acceleration of the second drive shaft; when the difference between the second rotational speed and the first rotational speed is greater than or equal to a preset difference, the second electric motor increases the rotational speed according to a first acceleration; and when the difference between the second rotational speed and the first rotational speed is less than the preset difference, the second electric motor increases the rotational speed according to a second acceleration, where the second acceleration is less than the first acceleration.

**In** some examples, the second electric motor increases the rotational speed according to the second acceleration so that the second rotational speed is equal to the first rotational speed.

In some examples, the drive force parameter includes the rotational speed of the second drive shaft, an acceleration of the second drive shaft, an angular velocity of the second drive shaft, an angular acceleration of the second drive shaft, torque of the second drive shaft, a current of the second electric motor, a voltage of the second electric motor, commutation data of the second electric motor, and values after unary/binary/n-ary calculations of the above data.

A power tool includes an output shaft configured to output torque and rotating about an output axis; an electric motor assembly including multiple electric motors with drive shafts, where at least part of the drive shafts are connected to the output shaft, and torque of the at least part of the drive shafts is output through the output shaft; a power supply configured to supply operating power to the electric motor assembly and connected to the electric motor assembly; and a controller configured to control operation of the electric motor assembly. The power tool includes different working modes, and the working modes include an adaptive mode in which the controller receives an output signal of a detector and sends a control signal to the electric motor assembly to switch the electric motor assembly to driving and connecting one or some of the multiple electric motors in the electric motor assembly or jointly driving and connecting all the multiple electric motors; and a first working mode in which the controller sends a signal to the electric motor assembly so that all the multiple electric motors in the electric motor assembly are jointly driven and connected. A mode switching switch is connected to the controller and operated to send at least a signal for switching a working mode to the adaptive mode or a signal for switching the working mode to the first working mode to the controller.

In some examples, a startup switch is further included, which is connected to the power supply and operated so that the electric motor assembly is energized; and the startup switch and the mode switching switch are different switching elements.

In some examples, a body housing accommodating at least the electric motor assembly and a base plate movably connected to the body housing are included, where the base plate is formed with a base plate bottom surface in contact with a workpiece, and the mode switching switch is disposed on an outer wall surface of the body housing.

In some examples, the body housing includes a grip located at the rear end of the power tool and holdable by a user to operate the power tool to perform a cutting action; an accommodation housing configured to accommodate a first electric motor and a second electric motor; and a connection portion for connecting the grip to the accommodation housing; where the startup switch is located on the grip, and the mode switching switch is located on the connection portion or the accommodation housing.

In some examples, the power supply includes a battery pack, the battery pack is disposed between the electric motor assembly and the grip for holding, and the body housing is provided with a semi-open battery accommodation compartment which is recessed inward.

In some examples, a control circuit board is further included, which includes the controller configured to control the electric motor assembly and is at least partially disposed below the battery pack.

In some examples, a control circuit board is further included, which includes the controller configured to control the electric motor assembly and is at least partially disposed in the grip.

In some examples, multiple control circuit boards are provided, and at least part of the control circuit boards are disposed in housings at ends of the electric motors.

In some examples, a control circuit board is further included, which includes the controller configured to control the electric motor assembly and is at least partially disposed between the electric motor assembly and the battery pack.

In some examples, the electric motor assembly includes at least a first electric motor and a second electric motor, the first electric motor includes a first drive shaft rotating about a first axis, and the second electric motor includes a second drive shaft rotating about a second axis, where the first drive shaft and the second drive shaft are arranged along a radial direction of the first drive shaft, or the first drive shaft and the second drive shaft intersect or are perpendicular.

In some examples, the electric motor assembly includes at least a first electric motor and a second electric motor, the first electric motor includes a first drive shaft rotating about a first axis, and the second electric motor includes a second drive shaft rotating about a second axis, where torque of the first drive shaft and torque of the second drive shaft are output through the output shaft. The electric motor assembly further includes a third electric motor configured to power components other than the output shaft.

In some examples, a dust suction fan is further included, and the third electric motor drives the dust suction fan to rotate to generate a suction force.

In some examples, an auxiliary cooling fan is further included, and the third electric motor drives the auxiliary cooling fan to rotate to generate a wind for heat dissipation of the electric motor assembly and/or the controller.

### BRIEF DESCRIPTION OF THE DRAWINGS

FIG. 1 is a perspective diagram of a circular saw in an example of the present application;
FIG. 2 is a structural diagram of the circular saw from another perspective in an example of the present application, showing relevant components of an electric motor assembly;
FIG. 3 is a cross-sectional diagram of a first electric motor in the electric motor assembly of the present application;
FIG. 4 is a schematic diagram of an electric motor assembly, a power transmission mechanism, and an output shaft of a circular saw according to an example of the present application;
FIG. 5 is a schematic diagram of a half-sectional view of part of the mechanism of a circular saw in an example of the present application;
FIG. 6 is a schematic diagram of the internal structure of a circular saw in an example of the present application.
FIG. 7 is a schematic diagram illustrating an electrical structure according to an example of the present application.
FIG. 8 is a block diagram illustrating electrical connections according to an example of the present application.
FIG. 9 is a control flowchart according to an example of the present application, where a power tool switches between working modes in a manual mode.
FIG. 10 is another block diagram illustrating electrical connections according to an example of the present application.
FIG. 11 is a control flowchart according to an example of the present application.
FIG. 12 is a control flowchart according to an example of the present application, where a power tool switches between working modes through electronic identification by detecting a physical quantity related to operation of a battery pack.
FIG. 13 is a control flowchart according to an example of the present application, where a controller determines, according to a physical quantity related to a running state of a battery pack, whether to respond to a configuration signal of a working mode of a power tool.
FIG. 14 is a flowchart of a control method for a power tool in an adaptive mode according to an example of the present application.
FIG. 15 is a third block diagram illustrating electrical connections according to an example of the present application.
FIG. 16 is a control flowchart according to an example of the present application, where a power tool switches between working modes through electronic identification.
FIG. 17 is a flowchart of a method for controlling rotational speeds of a first electric motor and a second electric motor of a power tool according to an example of the present application.
FIG. 18 is another flowchart of a method for controlling rotational speeds of a first electric motor and a second electric motor of a power tool according to an example of the present application.
FIG. 19A is a fourth block diagram illustrating electrical connections according to an example of the present application.
FIG. 19B is a fifth block diagram illustrating electrical connections according to an example of the present application.
FIG. 20 is a perspective view of a circular saw according to an example of the present application, where a first arrangement position of a mode switching switch is shown.
FIG. 21 is a perspective view of a circular saw according to an example of the present application, where a second arrangement position of a mode switching switch is shown.
FIG. 22 is a perspective view of a circular saw according to an example of the present application, where a third arrangement position of a mode switching switch is shown.
FIG. 23 is a perspective view of a circular saw according to an example of the present application, where a fourth arrangement position of a mode switching switch is shown.
FIG. 24 is a schematic view illustrating the internal structure of a circular saw according to an example of the present application, where a second arrangement position of a control circuit board is shown.
FIG. 25 is a schematic view illustrating the internal structure of a circular saw according to an example of the present application, where a third arrangement position of a control circuit board and second arrangement positions of an electric motor assembly are shown.
FIG. 26 is a schematic view illustrating the internal structure of a circular saw according to an example of the present application, where third arrangement positions of control circuit boards are shown.
FIG. 27 is a structural view of an electric motor assembly, a power transmission mechanism, and an output shaft of a circular saw according to an example of the present application, where second arrangement positions of the above components are shown.
FIG. 28 is a structural view of an electric motor assembly, a power transmission mechanism, and an output shaft of a circular saw according to an example of the present application, where third arrangement positions of the above components are shown.
FIG. 29 is a schematic view of FIG. 28 from another angle.
FIG. 30 shows a circular saw according to an example of the present application, where an electric motor assembly includes at least two electric motors.
FIG. 31 shows another circular saw according to an example of the present application, where an electric motor assembly includes at least two electric motors.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

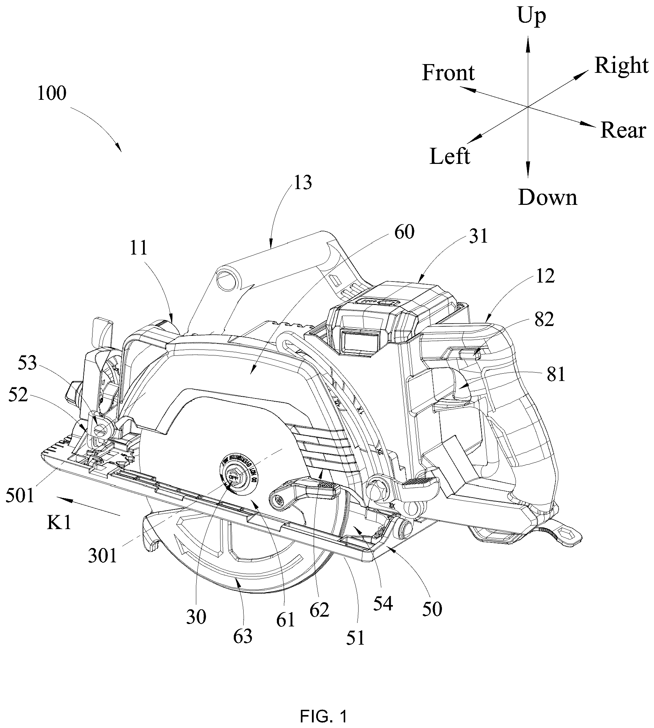

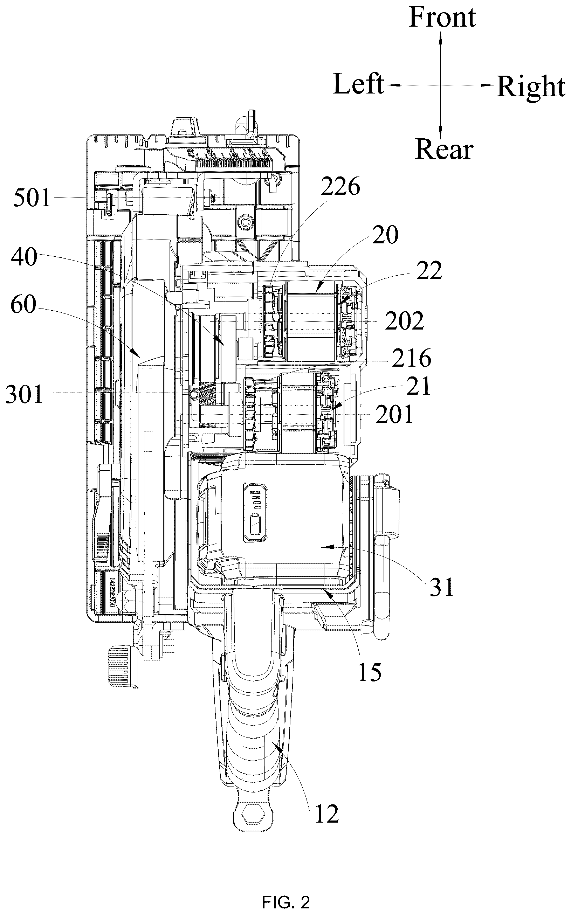

FIG. 1 illustrates a power tool according to an example of the present application. As shown in FIG. 2, a power tool includes an electric motor assembly 20. In this example, the power tool is a circular saw 100. In some examples, the power tool may also be other cutting tools, such as a table saw, a miter saw, a stone cutter, a tile saw, a chain saw, etc.

In some examples, the power tool may also be a garden tool, such as a string trimmer, a blower, a walk-behind power tool such as a lawn mower, a cleaning machine, etc. Alternatively, the power tool may also be a decoration tool, such as a screwdriver/drill/wrench type tool, an electric hammer, a nail gun, a sander, etc. Or, the power tool may also be, for example, a reciprocating saw, a jigsaw, etc. Or, the power tool may also be other benchtop tools, such as a wood router, etc. Or, the power tool may also be a grinding tool, such as an angle grinder, a sander, etc. Or, the power tool may also be other power tools, such as a fan, etc. Or, it may be a non-road traveling vehicle, such as a multi-purpose vehicle, which may also be a beach buggy, a Utility Terrain Vehicle (UTV), a golf cart, an All-Terrain Vehicle (ATV), or may be an agricultural machinery vehicle, such as a harvester, a sprayer vehicle, etc. Of course, it is understandable that for traveling devices, it could also be a cleaning machine. It could also be an intelligent walking power tool that uses an electric motor or motor assembly for travel and implements operational functions, such as an intelligent lawn mower, etc.

It is understandable that any power tool driven by an electric motor can adopt the technical solution disclosed in this example, and all power equipment adopting the technical solution disclosed in this example falls within the scope of protection of this application. For example, the power tool can also be a power head, which includes an electric motor. The power head is configured to adapt to some output components to realize the function of the tool.

As shown in FIG. 1, taking the circular saw 100 as an example. The circular saw 100 is a handheld circular saw. Unless otherwise specified, directional terms such as front, rear, left, right, up, and down are defined relative to the normal operational orientation of the circular saw 100. For example, the forward direction of the circular saw 100 is defined as front, and the direction opposite to the forward direction of the circular saw 100 is defined as rear.

As shown in FIGS. 1 to 2, the circular saw 100 includes a power supply 31. In this example, the power supply 31 is a DC power supply. The DC power supply provides electrical energy for the circular saw 100. The DC power supply includes at least one battery pack configured to provide an energy source for the electric motor assembly 20. The battery pack, cooperating with the corresponding power circuit, supplies power to the circular saw 100. Those skilled in the art should understand that the power supply is not limited to scenarios using DC power; it can also supply power to the corresponding internal components through mains electricity, an AC power source, and corresponding rectification, filtering, and voltage regulation circuits. In the subsequent description, the battery pack 31 will be used to refer to the power supply, but this should not be construed as a limitation of the present application.

The battery pack 31 may be a lithium battery pack, a solid-state battery pack, or a pouch battery pack. In some examples, when the power supply includes multiple battery packs 31, the types of battery packs 31 may be the same or different. In some examples, the electrical parameters, structural parameters, and physical parameters of the multiple battery packs 31 may be the same or different.

As shown in FIGS 1 to 6, the circular saw 100 further includes: an output shaft 30, a body housing 11, the electric motor assembly 20, a power transmission mechanism 40, and a base plate 50. As shown in FIGS 1 to 2, the output shaft 30 is configured to mount a cutting part 61. The cutting part 61 rotates about an output axis 301. In this example, the cutting part 61 is a circular saw blade. The electric motor assembly 20 is configured to drive the output shaft 30 to rotate. The power transmission mechanism 40 is configured to transmit the output power of the electric motor assembly 20 to the output shaft 30. The body housing 11 is configured to house components such as the electric motor assembly 20 and the power transmission mechanism 40. The output shaft 30 and the cutting part 61 are located outside the body housing 11. The base plate 50 is movably connected to the body housing 11. The base plate 50 has a base plate bottom surface 51 for contacting a workpiece. The base plate 50 has a saw blade through hole 54 extending along a first direction K1. The saw blade can pass through the saw blade through hole 54 and protrude downward from the base plate bottom surface 51.

The body housing 11 forms or is connected to a grip 12 for holding. The grip 12 is located at a rear end of the circular saw 100 and can be held by a user to operate the circular saw 100 for cutting actions. In some examples, the grip 12 is also provided with a startup switch 81 and a safety switch 82. The startup switch 81 is connected to the power supply 31. The startup switch 81 is operated to energize the electric motor assembly 20. In this example, the startup switch 81 can only be triggered when the safety switch 82 is pressed. That is to say, two actions are required to start the electric motor or the electric motor assembly 20. Thereby, the danger caused by a single operation is avoided. When the user grips the grip 12, the user's hand gripping the grip 12 can trigger the safety switch 82 and the startup switch 81 to start or shut down the circular saw 100.

In one example, the body housing 11 may also form a second grip 13. The second grip 13 is located at the front end of the circular saw 100 and serves as an auxiliary handle. In one example, the second grip 13 may also be an external handle installed on the body housing 11. That is to say, the second grip 13 may be a separate auxiliary operating component installed on the body housing 11.

The circular saw 100 further includes a guard assembly 60. The guard assembly 60 can at least partially enclose the cutting part 61 to protect the environment and the user's safety. The guard assembly 60 includes a fixed guard 62 with an arc-shaped structure, and a movable guard 63 that rotates relative to the fixed guard 62. The fixed guard 62 is connected to the body housing 11. The movable guard 63 is sleeved inside the fixed guard 62 and can rotate about the output axis 301 to retract into the fixed guard 62. The output shaft 30 extends into the fixed guard 62. The connection between the cutting part 61 and the output shaft 30 is detachable. In actual work, different types of cutting parts 61 can be used according to the material of the object being cut. The cutting part 61 is disposed inside the fixed guard 62, with almost the upper half of its outer circumference covered by the fixed guard 62. The movable guard 63 rotates inside the fixed guard 62 to cover or expose the lower half of the cutting part 61. The movable guard 63 and the fixed guard 62 have an opening member for the movable guard 63. When using the circular saw 100, the operator manually pushes the opening member to cause the movable guard 63 to rotate, exposing part of the saw teeth.

The base plate 50 is movably connected to the fixed guard 62. In this example, the front side of the base plate 50 is provided with a connection base 52. The connection base 52 is connected to the fixed guard 62 via a pin 53, so that the fixed guard 62 can rotate relative to the base plate 50. The axis where the pin 53 is located is defined as a pivot axis 501. The pivot axis 501 is parallel to the output axis 301. When the fixed guard 62 rotates relative to the base plate 50 about the pivot axis 501, the relative position between the fixed guard 62 and the base plate 50 changes, resulting in different cutting depths for the circular saw 100. The rotation of the fixed guard 62 is achieved by applying force to the grip 12, causing the grip 12 to rotate relative to the base plate 50, thereby driving the fixed guard 62 to rotate relative to the base plate 50. It is understandable that in some examples, the pivot axis 501 and the output axis 301 may intersect or be perpendicular.

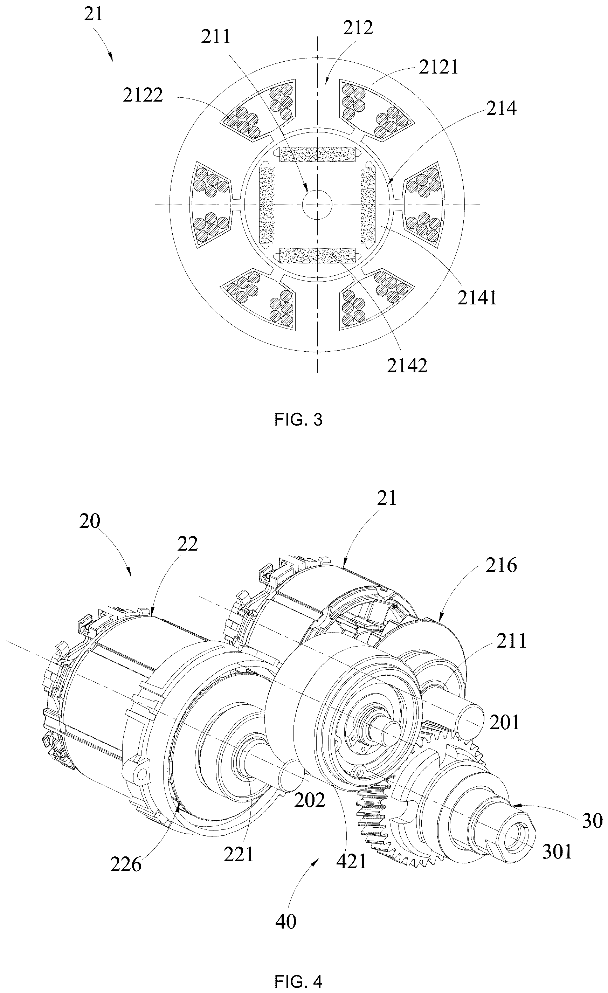

As shown in FIGS. 2 to 5, the electric motor assembly 20 includes a first electric motor 21 and a second electric motor 22. The first electric motor 21 includes a first drive shaft 211 that rotates about a first axis 201. The second electric motor 22 includes a second drive shaft 221 that rotates about a second axis 202. The first electric motor 21 and the second electric motor 22 respectively include a stator and a rotor. Taking the first electric motor 21 as an example, as shown in FIG. 3, the stator 212 includes a stator core 2121 and stator windings 2122. The rotor 214 includes a rotor core 2141 and permanent magnets 2142. The rotor 214 forms or is connected to a drive shaft, configured to output power. For an outer rotor motor, the rotor sleeves the stator. For an inner rotor motor, the stator sleeves the rotor. In this example, the overall structure of the motor here is substantially the same as that of a general brushless motor, and will not be described in detail here.

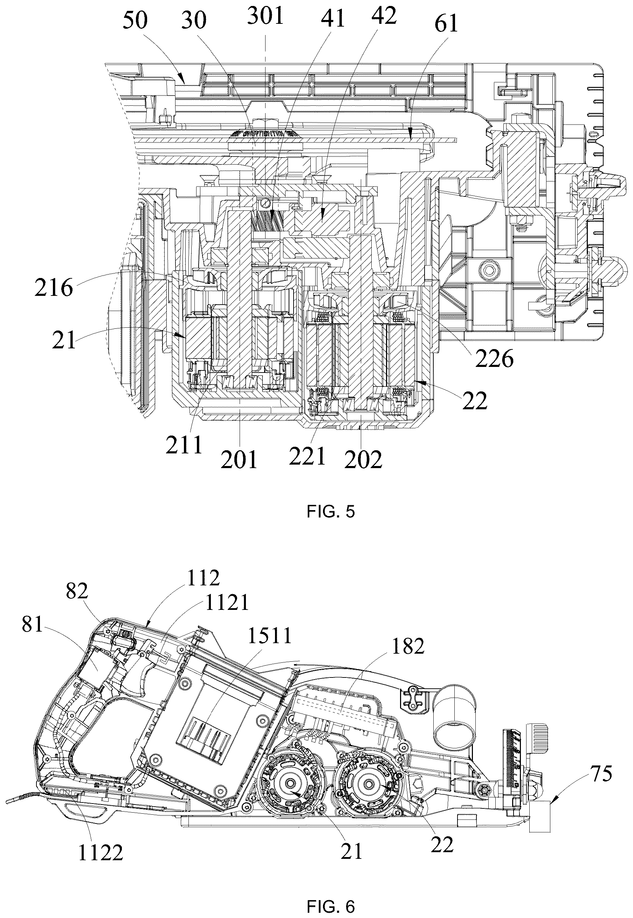

As shown in Figures 4 and 5, the power transmission mechanism 40 is configured to transmit the power from at least one of the first electric motor 21 and the second electric motor 22 to the output shaft 30. The torque of the first drive shaft 211 and the second drive shaft 221 is output through the output shaft 30. In this example, the first electric motor 21 and the second electric motor 22 work cooperatively to output the torque of the electric motor assembly 20 through the output shaft 30, outputting torque externally via the output shaft 30. Taking the electric circular saw of the present application as an example, the first electric motor 21 and the second electric motor 22 work cooperatively to drive the cutting part 61 via the output shaft 30 to perform a cutting motion. This is different from multi-motor driven power tools in the related art, such as outdoor traveling devices or wheeled devices, which use multiple motors, for example dual motors, to drive different output shafts or output portions respectively. Exemplarily, in the related art, the first electric motor 21 and the second electric motor 22 are used to drive two or more drive wheels or drive shafts respectively. However, in this example, the electric motor assembly 20 including multiple electric motors is used to drive the same output shaft. That is to say, the torque of the drive shafts of the multiple electric motors is output through one output shaft. The torque transmission paths of the multiple electric motors have the same endpoint, improving the high-efficiency operating range of the entire power tool, enabling a power tool with only one output shaft to also be driven efficiently using multiple electric motors. Compared to multiple electric motors driving different output portions or output shafts, using multiple electric motors to drive one output shaft in this application requires overcoming more difficulties in terms of transmission coordination, power distribution, and the drive structure of the electric motor assembly 20 and the power transmission mechanism 40.

When the power tool of the present application is a non-road traveling vehicle or an agricultural machinery vehicle, the electric motor assembly 20 provides power for one output shaft. Exemplarily, when the electric motor assembly 20 serves as a travel drive, the electric motor assembly 20 drives one travel wheel axle or travel wheel. When the electric motor assembly 20 serves as a drive for a functional component (e.g., a mowing blade), the electric motor assembly 20 drives the mowing blade on one output shaft. This needs to be distinguished from the related art where multiple electric motors drive multiple output shafts or drive axles.

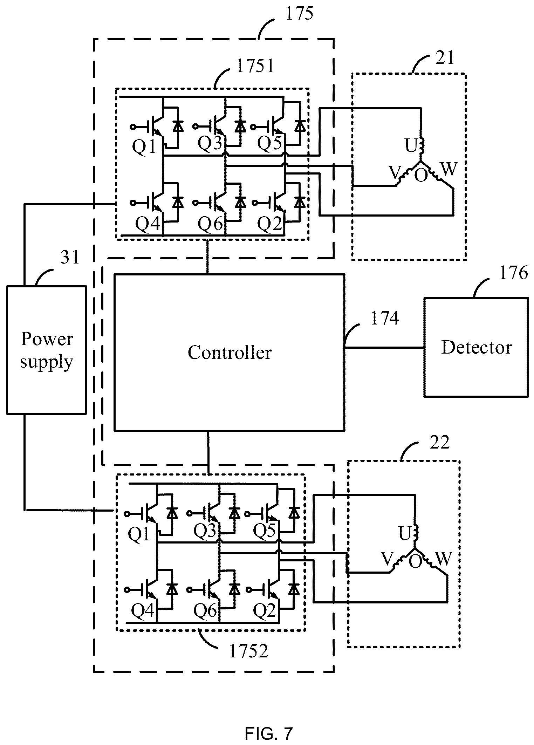

As shown in FIG. 7, the circular saw 100 further includes a control circuit including a controller 174 configured to control operation of the electric motor assembly 20. The controller 174 is disposed on a control circuit board 182, where the control circuit board 182 includes a PCB and an FPC board. The controller 174 adopts a dedicated control chip, such as a single-chip microcomputer or an MCU. The controller 174 includes a processor and a memory, the processor is configured to be programmably controlled to implement respective functions, and the memory may store programs to be executed and related data. It is to be noted that the control chip may be integrated into the controller 174 or may be disposed independently of the controller 174. A structural relationship between a driver chip and the controller 174 is not limited in this example.

As shown in FIG. 7, the control circuit further includes a driver circuit 175 disposed between a power supply 31 and the electric motor assembly 20 and configured to drive the electric motor assembly 20. The driver circuit 175 is a three-phase bridge driver circuit including multiple switching elements, for example, controllable semiconductor power devices (such as FETs, BJTs, or IGBTs). It is to be understood that the above switching elements may be any other types of solid-state switches, such as IGBTs or BJTs. In this example, the driver circuit 175 includes a first driver circuit 1751 connected between the first electric motor 21 and the power supply 31 and a second driver circuit 1752 connected between the second electric motor 22 and the power supply 31.

The circular saw 100 includes switchable working modes. For the electric motor assembly 20 with the first electric motor 21 and the second electric motor 22, the first electric motor 21 and the second electric motor 22 in the electric motor assembly 20 are configured with different operating parameters or switching parameters in different working modes.

In some examples, the circular saw 100 includes an adaptive mode and a first working mode. In the adaptive mode, the controller 174 switches a running state of the electric motor assembly 20 according to an identification result of a detector 176, where the running state of the electric motor assembly 20 includes at least that the first electric motor 21 or the second electric motor 22 is driven or that the first electric motor 21 and the second electric motor 22 are jointly driven. In the first working mode, the controller 174 makes the first electric motor 21 and the second electric motor 22 jointly driven in response to an input instruction.

In this example, in the adaptive mode, the controller 174 determines a working condition of the circular saw 100 and/or a load condition of the output shaft 30 according to an identification manner of the detector 176 (such as sensor identification, signal identification, or data estimation identification) and switches to single-motor operation or dual-motor operation and dynamically adjusts the number of driven electric motors in the electric motor assembly 20 and their respective drive parameters (such as target rotational speeds, target torque, or current limits) according to the working condition of the circular saw 100 and/or the load condition of the output shaft 30 so that the output of the electric motor assembly 20 satisfies the actual working requirement of the circular saw 100 (for example, maintaining a set rotational speed of the output shaft 30 or minimizing total input power while satisfying the load requirement), and the electric motor assembly 20 adapts to the working condition of the power tool. A single-motor or dual-motor working mode is intelligently selected according to the load condition, thereby optimizing the operation efficiency of the electric motors, potentially extending the single-charge usage time of a battery, ensuring the single-battery life of the power tool, and enabling intelligent switching, energy-saving, and high efficiency.

In the first working mode, the first electric motor 21 and the second electric motor 22 are jointly driven, that is to say, the controller 174 always maintains a jointly driven state of the first electric motor 21 and the second electric motor 22 in response to a received activation signal of the first working mode, where the jointly driven state is terminated only when the controller 174 receives an instruction to exit the first working mode or an instruction to switch to another working mode.

Compared with the adaptive mode characterized by dynamic switching between a single electric motor and two electric motors according to the working condition, the first working mode provides a preset peak output capability. When the user activates the first working mode, the controller 174 ignores a real-time working condition detection signal and forcibly and simultaneously activates the first electric motor 21 and the second electric motor 22 so that the power tool provides strong working torque. The mode is applicable to a working condition requiring the continuous output of maximum torque. For example, during cutting of a high-hardness material, the collaborative driving of two electric motors ensures that the output shaft 30 provides torque higher than maximum output in the adaptive mode.

The power tool of the present application is provided with both the adaptive mode and the first working mode that are switchable between each other and may switch between different working modes according to different working conditions and different requirements. In the adaptive mode, the motor scheduling based on load sensing enables optimized energy efficiency and an extended battery life. In the first working mode, the full-time driving of two electric motors provides predictable maximum mechanical output. The dual-mode architecture enables the power tool equipped with a multi-motor system (such as the electric motor assembly 20 including the first electric motor 21 and the second power tool 22) to dynamically adapt to an energy efficiency priority scenario and a power priority scenario.

In some examples, the working modes further include a second working mode. In the second working mode, the controller 174 drives the first electric motor 21 and brakes the second electric motor 22 in response to an input instruction. That is to say, after a signal for the circular saw 100 to enter the second working mode is input into the controller 174, the first electric motor 21 in the electric motor assembly 20 is driven to operate and the second electric motor 22 is braked to output no torque, and the electric motor assembly 20 is in a single-motor driven state in which only the first electric motor 21 works. Only when a signal for entering another working mode or a signal for exiting the second working mode is input into the controller 174, can the electric motor assembly 20 terminate the single-motor driven state in which the first electric motor 21 is driven and the second electric motor 22 is braked in the second working mode. To better extend usage scenarios, when the user requires a special working condition where low output torque is continuously used or another working condition that requires only a single drive, the circular saw 100 enters the second working mode and provides suitable output torque and lower energy consumption, further increasing the working conditions under which the power tool can be used.

In some examples, the circular saw 100 is operable in the adaptive mode and a selected mode. In the selected mode, the controller 174 responds to a received particular input instruction and determines and executes a corresponding predetermined motor drive configuration according to the instruction, where each input instruction is mapped to a particular activation combination of one or more electric motors in the electric motor assembly 20. For example, a first input instruction corresponds to a configuration in which only the first electric motor 21 is driven, and a second input instruction corresponds to a configuration in which the first electric motor 21 and the second electric motor 22 are driven simultaneously. The controller 174 maintains the selected drive configuration continuously until the controller 174 receives a new input instruction to execute a different drive configuration, an instruction to exit the selected mode, or an instruction to switch to another working mode (such as the adaptive mode). The selected mode optionally includes the first working mode (corresponding to a dual-motor drive configuration) and/or the second working mode described above. Additionally, in examples (described in detail later) where the electric motor assembly 20 may include more electric motors (for example, a third electric motor 23), the selected mode further provides additional predetermined drive configurations, including, but not limited to, driving only the first electric motor 21, driving the first electric motor 21 and the second electric motor 22, or driving a combination of all the first electric motor 21, the second electric motor 22, and the third electric motor 23.

In some examples, in the adaptive mode, the controller 174 may also dynamically adjust the running state of the electric motor assembly 20 according to the identification result of the detector 176. For example, the controller 174 may selectively start one of the first electric motor 21 and the second electric motor 22 or simultaneously start the first electric motor 21 and the second electric motor 22 according to the identification result of the detector 176. For example, in the adaptive mode, the first electric motor 21 and/or the second electric motor 22 have constant drive parameters, and the controller 174 may selectively start one of the first electric motor 21 and the second electric motor 22 or simultaneously start the first electric motor 21 and the second electric motor 22 according to the identification result of the detector 176, where the controller 174 switches only the started states of the first electric motor 21 and the second electric motor 22, but the first electric motor 21 and the second electric motor 22 operate with preset drive parameters after being started. For example, after the first electric motor 21 is started, the first electric motor 21 performs torque output with output torque at a highest efficiency point of motor efficiency, and after the second electric motor 22 is started, the second electric motor 22 performs torque output with output torque at a highest efficiency point of motor efficiency. It is to be interpreted that the "motor efficiency" refers to the ratio of output power (mechanical) to input power (electrical) and is generally expressed as a percentage.

For example, in the adaptive mode, the drive parameters of the first electric motor 21 and the second electric motor 22 may be dynamically adjusted, for example, the output torque of the first electric motor 21 and the output torque of the second electric motor 22 may be dynamically adjusted. Optionally, the output torque of the first electric motor 21 and the output torque of the second electric motor 22 are dynamically adjusted so that the motor efficiency of the first electric motor 21 is greater than or equal to 70%, and the motor efficiency of the second electric motor 22 is greater than or equal to 70%. In some examples, an output rotational speed of the first electric motor 21 and an output rotational speed of the second electric motor 22 are dynamically adjusted so that output torque of the power tool is required torque for implementing a function, and the output rotational speed of the first electric motor 21 and/or the output rotational speed of the second electric motor 22 are adjusted regularly or in real time according to the magnitude of the required torque. It is to be understood that currents, voltages, or other motor control-related parameters of the electric motors may be dynamically adjusted to make the output of the electric motor assembly satisfy a requirement for implementing a function.

In the first working mode, the controller always keeps the first electric motor 21 and the second electric motor 22 jointly driven. In this example, when the first electric motor 21 and the second electric motor 22 are jointly driven, running states of the first electric motor 21 and the second electric motor 22 are dynamically adjusted, and the first electric motor 21 and the second electric motor 22 always keep outputting torque to the output shaft. In this mode, the controller 174 executes any one of the following control strategies: (a) a dynamic adjustment strategy: according to real-time required torque of the power tool, rotational speed instruction values of the first electric motor 21 and the second electric motor 22 are adjusted periodically or in real time so that the total output torque of the output shaft 30 matches the required torque; (b) a parameter switching strategy: according to predefined load grading thresholds of the output shaft, automatic switching is performed between multiple groups of preset drive parameters, where each group of parameters corresponds to a particular motor speed-torque working point; (c) a maximum torque strategy: the two electric motors are driven according to preset constant maximum torque parameters so that the first electric motor 21 and the second electric motor 22 continuously output their respective rated maximum torque, and the electric motor assembly 20 generates peak output torque. When the maximum torque strategy is used, the output torque of the first electric motor 21 and the output torque of the second electric motor 22 each fluctuate within a range of ±5% of the rated torque value. The controller 174 optionally implements the joint driving in the first working mode using an FOC algorithm which is also applicable to the adaptive mode. In particular examples, square wave control may be used as an alternative driving scheme in the adaptive mode.

In the second working mode, the controller 174 drives the first electric motor 21 to work and brakes the second electric motor 22. When the second electric motor 22 is in a braked state, the second driver circuit 1752 connected to the second electric motor 22 is in a non-conductive state, and power of the power supply 31 is not supplied to the second electric motor 22. When the power tool is in the second working mode, the electric motor assembly 20 consumes less power. In some examples, the controller 174 dynamically adjusts the output rotational speed of the first electric motor 21 so that the output torque of the power tool is required torque for implementing a function, and the output rotational speed of the first electric motor 21 is adjusted regularly or in real time according to the magnitude of the required torque. In some examples, the controller 174 drives the first electric motor 21 according to multiple groups of preset drive parameters. For example, in the first working mode, according to different grades of load states of the output shaft, the switching is performed between the multiple groups of preset drive parameters according to multiple grades so that the first electric motor 21 has running states adapted to different output. In some examples, the controller 174 drives the first electric motor 21 according to one group of preset drive parameters, where types of preset parameters include one or more of a rotational speed of the electric motor, output torque of the electric motor, an output current of the electric motor, or other operating parameters of the electric motor. According to different product requirements, specific values of the preset parameters are not limited. Optionally, the preset parameters are values corresponding to output efficiency of greater than or equal to 70% of the first electric motor 21. Optionally, the preset parameters are specific values set according to product requirements such as low power consumption and low noise and satisfying the requirements.

In the adaptive mode, when the controller 174 chooses to drive a single electric motor, the other electric motor is in a standby state. For example, when the first electric motor 21 is driven, the second electric motor 22 is in the standby state. When the second electric motor 22 is in the standby state, the power supply 31 supplies power to the second electric motor 22 through the second driver circuit 1752, but a second drive shaft 221 outputs no torque. That is to say, when the second electric motor 22 is in the standby state, the second electric motor 22 is not offline, the second driver circuit 1752 for the second electric motor 22 still receives control signals from the controller 174, and the second electric motor 22 is in a "zero"-torque control state. Alternatively, the second driver circuit 1752 for the second electric motor 22 continuously receives control signals from the controller 174 and performs zero-torque closed-loop control, which is embodied as applying a static bias current to maintain a rotor position or outputting a PWM waveform with a duty cycle of 0%. In some examples, the power supply of the second electric motor is directly cut off in a switch on-off manner so that the second electric motor is on standby.

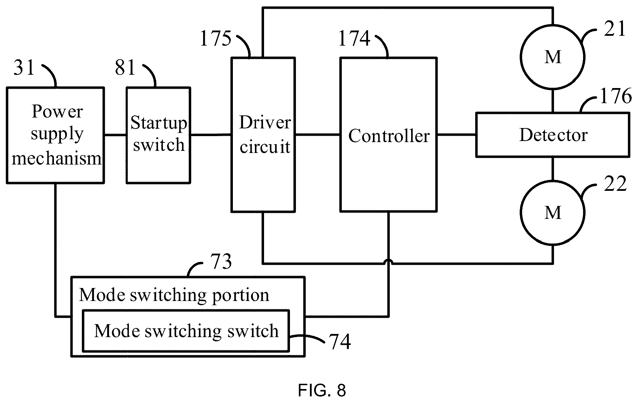

For a manner of switching the power tool between different working modes, as shown in FIG. 8, in some examples, the power tool switches between the working modes in a manual mode. For example, the power tool includes a mode switching portion 73 configured to receive a switching instruction input by the user and send a signal for executing the adaptive mode, the first working mode, or the second working mode. The mode switching portion 73 includes a switching element, the switching element is defined as a mode switching switch 74, and the mode switching portion 73 is configured to receive the switching instruction input by the user. The mode switching switch 74 includes at least one of a mechanical switch or an electronic switch. The mechanical switch includes a push switch (such as a button switch, a key switch, a membrane switch, or a rocker switch), a toggle switch (such as a gear switch, a lever switch, or a pull-rod switch), a rotary switch (such as a knob switch or a dial switch), and a microswitch. The electronic switch includes a sensor and a chip. According to different types of sensors, the electronic switch includes a touch switch (capacitive or resistive), a sensing switch (such as infrared sensing, microwave sensing, ultrasonic sensing, piezoelectric sensing, electromagnetic sensing, or capacitive sensing), a voice operated switch, and a wireless switch (connected to an external smart device).

The user inputs a desired working mode, such as the first working mode, the second working mode, or the adaptive working mode, through the mode switching portion 73. The mode switching portion 73 outputs an input instruction corresponding to the switching instruction to the controller 174. The controller 174 configures the corresponding working mode of the power tool. When the switching instruction received by the mode switching portion 73 is the first working mode or the second working mode, the controller 174, in response to a signal output from the mode switching portion 73, determines that the electric motor assembly 20 operates in a state corresponding to the first working mode or the second working mode.

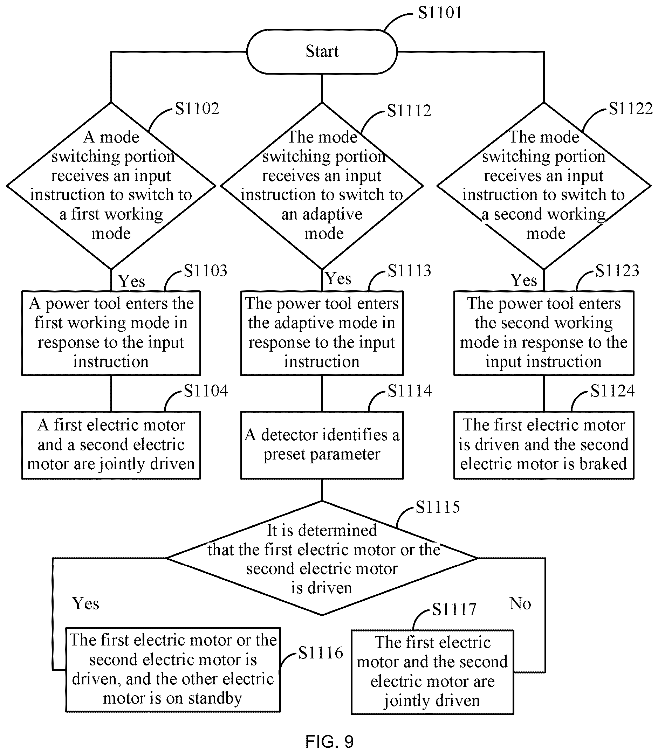

FIG. 9 shows a control method for the power tool, where the power tool switches between the working modes in the manual mode. The method specifically includes the steps below.

In S1101, the flow starts.

In S1102, the mode switching portion 73 receives an input instruction to switch to the first working mode. If so, S1103 is performed. If not, the flow returns to S1101.

In S1103, the power tool enters the first working mode in response to the input instruction.

In S1104, the first electric motor and the second electric motor are jointly driven.

When the switching instruction received by the mode switching portion 73 is switching to the first working mode, the controller 174, in response to a signal output from the mode switching portion 73, makes the first electric motor and the second electric motor jointly driven and keeps the first electric motor and the second electric motor in the jointly driven state.

In S1112, the mode switching portion 73 receives an input instruction to switch to the adaptive mode. If so, S1113 is performed. If not, the flow returns to S1101.

In S1113, the power tool enters the adaptive mode in response to the input instruction.

In S1114, the detector identifies a preset parameter.

In S1115, it is determined that the first electric motor or the second electric motor is driven. If so, S1116 is performed. If not, S1117 is performed.

In S1116, the first electric motor or the second electric motor is driven, and the other electric motor is on standby.

In S1117, the first electric motor and the second electric motor are jointly driven.

When the switching instruction received by the mode switching portion 73 is switching to the adaptive mode, in the adaptive mode, the controller 174 may determine a load of the power tool according to the identification result of the detector 176 and dynamically adjusts the running states of the first electric motor 21 and the second electric motor 22. When the controller 174 determines according to data of the detector that the output of the electric motor assembly satisfies the current load requirement of the power tool if the first electric motor or the second electric motor is driven alone, the first electric motor or the second electric motor operates and the other electric motor is on standby. When the controller determines according to the data of the detector that the output of the electric motor assembly cannot satisfy the load requirement of the power tool if the first electric motor or the second electric motor is driven alone, the first electric motor and the second electric motor are driven simultaneously.

In S1122, the mode switching portion 73 receives an input instruction to switch to the second working mode. If so, S1123 is performed. If not, the flow returns to S1101.

In S1123, the power tool enters the second working mode in response to the input instruction.

In S1124, the first electric motor is driven and the second electric motor is braked.

When the switching instruction received by the mode switching portion 73 is switching to the second working mode, the controller 174, in response to a signal output from the mode switching portion 73, drives the first electric motor, brakes the second electric motor, and always keeps the second electric motor in the braked state.

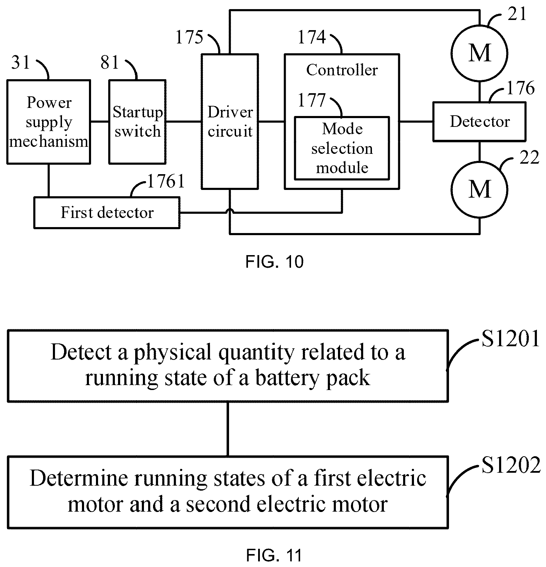

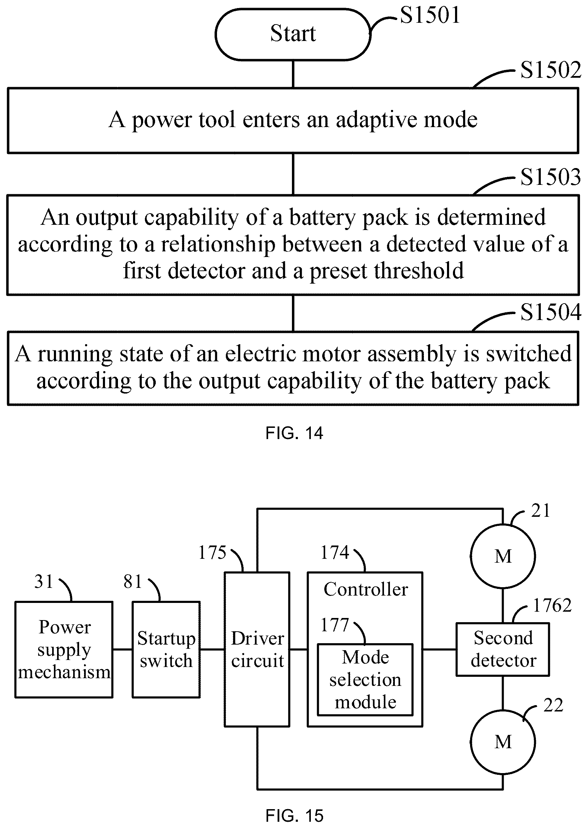

In some examples, the power tool switches between the working modes through electronic identification. As shown in FIGS. 10 and 15, the controller 174 includes a mode selection module 177 configured to automatically switch a configured working mode of the power tool according to a parameter identification result.

In some examples, the controller 174 determines the running states of the first electric motor 21 and the second electric motor 22 according to a physical quantity related to a running state of the battery pack 31. The control circuit includes a first detector 1761 configured to detect the physical quantity related to the running state of the battery pack 31. Optionally, the physical quantity related to the running state of the battery pack 31 includes, but is not limited to, a voltage, a current, a temperature, a state of power (SOP), a state of charge (SOC), internal resistance, and a model of the battery pack 31. For example, the physical quantity related to the running state of the battery pack 31 includes a combination of one or more of the physical quantities disclosed above with time.

As shown in FIG. 11, a control method for the power tool specifically includes the steps below.

In S1201, the physical quantity related to the running state of the battery pack is detected.

The first detector 1761 is configured to detect the physical quantity related to the running state of the battery pack 31. The physical quantity related to the running state of the battery pack 31 includes, but is not limited to, the voltage, the current, the temperature, the SOP, the SOC, the internal resistance, and the model of the battery pack 31. The physical quantity related to the running state of the battery pack 31 includes a combination of one or more of the physical quantities disclosed above with time.

In S1202, the running states of the first electric motor and the second electric motor are determined.

According to the physical quantity related to the operation of the battery pack, an output capability of the battery pack is determined, and the running states of the first electric motor and the second electric motor are determined.

For example, the mode selection module 177 determines a working mode of the power tool according to the physical quantity related to the running state of the battery pack 31. For example, the controller 174 performs a configuration of the working mode of the power tool through a comparison between a detected value of the first detector 1761 and a preset threshold. The comparison includes a direct comparison between the detected value and a detected value threshold, a comparison between a detected value variation and a variation threshold, a comparison between a result value after a unary/binary/n-ary calculation on the detected value and a result value threshold, and a comparison between a result value variation and a corresponding threshold.

For example, the controller 174 determines the output capability of the battery pack 31 according to a relationship between the detected value of the first detector 1761 and the preset threshold and determines the configured working mode of the power tool according to the output capability of the battery pack 31. Optionally, the detected value of the first detector 1761 is an output current value of the battery pack 31, and the controller 174 may determine the configured working mode of the power tool based on a comparison between the current value and a current value threshold. Optionally, the detected value of the first detector 1761 is the output current value of the battery pack 31, and the controller 174 may determine the configured working mode of the power tool based on a comparison between a variation of current values detected twice or multiple times and a current variation threshold. Optionally, the detected value of the first detector 1761 is the output current value of the battery pack 31, and the controller 174 may determine the configured working mode of the power tool based on a comparison between an average of current values detected twice or multiple times and a current average threshold.

In this example, the output capability of the battery pack 31 includes a low output capability, a medium output capability, and a high output capability. For example, when the SOC of the battery pack 31 is less than or equal to a first power threshold, for example, 20%, the battery pack 31 is defined as having the low output capability. When the SOC of the battery pack 31 is greater than or equal to a second power threshold, for example, 75%, the battery pack 31 is defined as having the high output capability. When the SOC of the battery pack 31 is greater than the first power threshold and less than the second power threshold, the battery pack 31 has the medium output capability. For example, when discharge power of the battery pack 31 is less than or equal to a first power threshold, the battery pack 31 is defined as having the low output capability. When the discharge power of the battery pack 31 is greater than or equal to a second power threshold, the battery pack 31 is defined as having the high output capability. When the discharge power of the battery pack 31 is greater than the first power threshold and less than the second power threshold, the battery pack 31 has the medium output capability, where the first power threshold is less than the second power threshold. It is to be understood that the output capability of the battery pack 31 may also be defined through the remaining energy, discharge current, and voltage of the battery pack 31, a cycle life of the battery, and the internal resistance and temperature of the battery pack 31.

In this example, when the battery pack 31 is determined to have the high output capability according to the physical quantity related to the running state of the battery pack 31, the mode selection module 177 of the controller 174 determines that the power tool switches to and operates in the first working mode. When the battery pack 31 is determined to have the medium output capability according to the physical quantity related to the running state of the battery pack 31, the mode selection module 177 of the controller 174 determines that the power tool switches to and operates in the adaptive mode. When the battery pack 31 is determined to have the low output capability according to the physical quantity related to the running state of the battery pack 31, the mode selection module 177 of the controller 174 determines that the power tool switches to and operates in the second working mode. When the controller 174 determines that the power tool switches to and operates in the first working mode or the second working mode, a switching signal is used as the input instruction, and the controller 174, in response to the switching signal, calls drive parameters corresponding to the first working mode or the second working mode and determines that the electric motors operate in states corresponding to the first working mode or the second working mode.

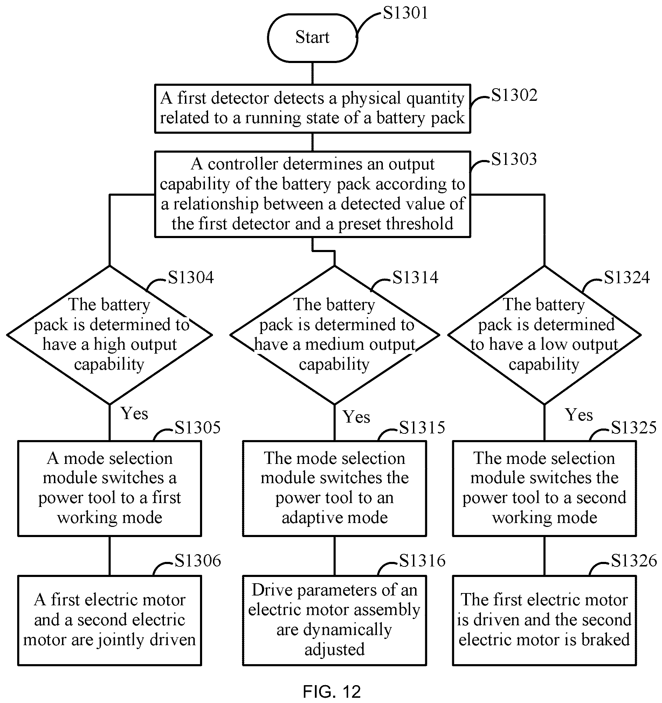

FIG. 12 shows a control method for the power tool, where the power tool switches between the working modes through electronic identification, the controller 174 includes the mode selection module 177, and the mode selection module 177 determines the configured working mode of the power tool according to the physical quantity related to the running state of the battery pack 31. Specific steps are described below.

In S1301, the flow starts.

In S1302, the first detector 1761 detects the physical quantity related to the running state of the battery pack 31.

The first detector 1761 is configured to detect the physical quantity related to the running state of the battery pack 31. The physical quantity related to the running state of the battery pack 31 includes, but is not limited to, the voltage, the current, the temperature, the SOP, the SOC, the internal resistance, and the model of the battery pack 31. The physical quantity related to the running state of the battery pack 31 includes a combination of one or more of the physical quantities disclosed above with time.

In S1303, the controller 174 determines the output capability of the battery pack 31 according to the relationship between the detected value of the first detector 1761 and the preset threshold.

When the SOC of the battery pack 31 is less than or equal to the first power threshold, for example, 20%, the battery pack 31 is defined as having the low output capability. When the SOC of the battery pack 31 is greater than or equal to the second power threshold, for example, 75%, the battery pack 31 is defined as having the high output capability. When the SOC of the battery pack 31 is greater than the first power threshold and less than the second power threshold, the battery pack 31 has the medium output capability. For example, when the discharge power of the battery pack 31 is less than or equal to the first power threshold, the battery pack 31 is defined as having the low output capability. When the discharge power of the battery pack 31 is greater than or equal to the second power threshold, the battery pack 31 is defined as having the high output capability. When the discharge power of the battery pack 31 is greater than the first power threshold and less than the second power threshold, the battery pack 31 has the medium output capability, where the first power threshold is less than the second power threshold. It is to be understood that the output capability of the battery pack 31 may also be defined through the remaining energy, discharge current, and voltage of the battery pack 31, the cycle life of the battery, and the internal resistance and temperature of the battery pack 31.

In S1304, the battery pack 31 is determined to have the high output capability. If so, S1305 is performed. If not, the flow returns to S1303.

In S1305, the mode selection module 177 determines that the power tool switches to the first working mode.

In S1306, the first electric motor and the second electric motor are jointly driven.

The first electric motor and the second electric motor are jointly driven and kept jointly driven.

In S1314, the battery pack 31 is determined to have the medium output capability. If so, S1315 is performed. If not, the flow returns to S1303.

In S1315, the mode selection module 177 determines that the power tool switches to the adaptive mode.

In S1316, the drive parameters of the electric motor assembly are dynamically adjusted.

In S1324, the battery pack 31 is determined to have the low output capability. If so, S1325 is performed. If not, the flow returns to S1303.

In S1325, the mode selection module 177 determines that the power tool switches to the second working mode.

In S1326, the first electric motor is driven and the second electric motor is braked.

The first electric motor is driven, the second electric motor is braked, and the state in which only the first electric motor operates is maintained.

In some examples, the controller 174 determines, according to the physical quantity related to the running state of the battery pack 31, whether to respond to a configuration signal of the working mode of the power tool. For example, the configuration signal includes a working mode configuration signal generated according to the switching instruction input by the user through the mode switching portion 73 and a working mode configuration signal determined by the controller 174 after identification of a preset physical quantity. For example, the working mode configuration signal of the power tool is from the mode switching portion 73, and the mode switching portion 73 receives the switching instruction input by the user and sends the signal for executing the adaptive mode, the first working mode, or the second working mode. For example, the working mode configuration signal of the power tool is signal output of the mode selection module 177 of the controller 174, and the mode selection module 177 sends a signal for configuring the power tool in the adaptive mode, the first working mode, or the second working mode according to the parameter identification result, for example, a physical quantity related to the running state of the electric motor assembly 20, where the details are provided below. In this example, the controller 174 determines, according to the physical quantity related to the running state of the battery pack 31, whether to respond to the signal from the mode switching portion 73 or the mode selection module 177. That is to say, when the power tool receives the switching or configuration signal of the working mode, the controller 174 determines, according to the physical quantity related to the running state of the battery pack 31, whether the working mode can be switched according to the above signal, regardless of manual switching by the user or switching the power tool through automatic identification.

In some examples, when the battery pack 31 is determined to have the low output capability according to the physical quantity related to the running state of the battery pack 31, the mode selection module 177 of the controller 174 responds only to a configuration signal of the second working mode. That is to say, when the battery pack 31 has the low output capability, the controller 174 does not respond even if the controller 174 receives a signal for switching to the adaptive working mode or the first working mode. When the battery pack 31 is determined to have the medium output capability according to the physical quantity related to the running state of the battery pack 31, the mode selection module 177 of the controller 174 does not respond to a signal of the first working mode. That is to say, when the battery pack 31 is determined to have the medium output capability according to the physical quantity related to the running state of the battery pack 31, the configuration of the first working mode is not responded to, and the electric motor assembly does not continuously maintain a state in which the first electric motor 21 and the second electric motor 22 are jointly driven. When the battery pack 31 is determined to have the medium output capability according to the physical quantity related to the running state of the battery pack 31, if it is determined in the adaptive mode according to the identification result of the detector that the first electric motor and the second electric motor need to be jointly driven, the controller responds to the above drive signal, and in the adaptive mode, a time for which the electric motor assembly is in the running state in which the first electric motor and the second electric motor are jointly driven is less than or equal to a preset time threshold. For example, the preset time threshold is different according to a different nominal capacity of the battery pack, a different nominal voltage of the battery pack, and different models of the first electric motor and the second electric motor. Comparatively speaking, the greater the nominal capacity of the battery pack, the larger the preset time threshold; the higher the nominal voltage of the battery pack, the larger the preset time threshold; the stronger the output capabilities of the first electric motor and the second electric motor, the larger the preset time threshold. When the battery pack 31 is determined to have the high output capability according to the physical quantity related to the running state of the battery pack 31, configuration signals of all the working modes can be responded to.

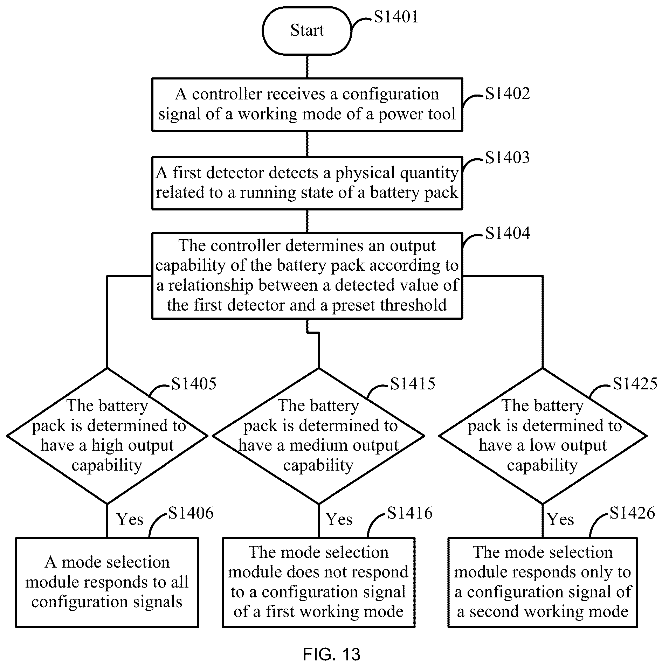

FIG. 13 shows a control method for the power tool, where the controller 174 determines, according to the physical quantity related to the running state of the battery pack 31, whether to respond to the configuration signal of the working mode of the power tool. Specific steps are described below.

In S1401, the flow starts.

In S1402, the controller 174 receives the mode configuration signal of the power tool.

The configuration signal includes the working mode configuration signal generated according to the switching instruction input by the user through the mode switching portion 73 and the working mode configuration signal determined by the controller 174 after identification of the preset physical quantity. For example, the working mode configuration signal of the power tool is from the mode switching portion 73, and the mode switching portion 73 receives the switching instruction input by the user and sends the signal for executing the adaptive mode, the first working mode, or the second working mode. For example, the working mode configuration signal of the power tool is the signal output of the mode selection module 177 of the controller 174, and the mode selection module 177 sends the signal for configuring the power tool in the adaptive mode, the first working mode, or the second working mode according to the physical quantity related to the running state of the electric motor assembly 20 and/or the physical quantity related to the running state of the battery pack 31.

In S1403, the first detector 1761 detects the physical quantity related to the running state of the battery pack 31.

In S1404, the controller determines the output capability of the battery pack according to the relationship between the detected value of the first detector 1761 and the preset threshold.

In S1405, the battery pack is determined to have the high output capability. If so, S1406 is performed. If not, the flow returns to S1404.

In S1406, the mode selection module 177 responds to all configuration signals.

In S1415, the battery pack is determined to have the medium output capability. If so, S1416 is performed. If not, the flow returns to S1404.

In S1416, the mode selection module 177 does not respond to the configuration signal of the first working mode.

In S1425, the battery pack is determined to have the low output capability. If so, S1426 is performed. If not, the flow returns to S1404.

In S1426, the mode selection module 177 responds only to the configuration signal of the second working mode.

In the related art, battery packs 31 of different types or with different power states have different output capabilities. When the working mode of the power tool is mismatched with the output capability of the battery pack 31, the output capability of the battery pack 31 is likely to be insufficient to support the simultaneous working of multiple electric motors, or the high output capability of the battery pack 31 is limited in a single-motor drive mode, resulting in low matching efficiency between the output capability of the battery pack 31 and the working mode of the electric motor assembly 20. In this example, the controller 174 directly determines the working mode according to the physical quantity related to the running state of the battery pack 31 or limits a switching operation of the working mode according to the physical quantity, thereby eliminating the problem of mismatching between the output capability and the working mode, improving a matching degree between the output capability and the working mode, and avoiding potential damages and risks caused to the battery pack 31 and components of the power tool by the forced operation of multiple electric motors in the case of an insufficient output capability.

In some examples, in the adaptive mode, the first detector 1761 is configured to detect the physical quantity related to the running state of the battery pack 31, and the controller 174 dynamically adjusts the running states of the first electric motor 21 and the second electric motor 22 according to the physical quantity related to the running state of the battery pack 31 and detected by the first detector 1761. Optionally, the physical quantity related to the running state of the battery pack 31 includes, but is not limited to, the voltage, the current, the temperature, the SOP, the SOC, the internal resistance, and the model of the battery pack 31. For example, the physical quantity related to the running state of the battery pack 31 further includes a combination of one or more of the physical quantities disclosed above with time. The controller 174 determines the output capability of the battery pack 31 by comparing the detected value of the first detector 1761 with the preset threshold. The controller 174 switches the running state of the electric motor assembly 20 according to the output capability of the battery pack 31, for example, the first electric motor 21 or the second electric motor 22 is driven, or the first electric motor 21 and the second electric motor 22 are driven simultaneously. For example, the comparison between the detected value of the first detector 1761 and the preset threshold includes the direct comparison between the detected value and the detected value threshold, the comparison between the detected value variation and the variation threshold, the comparison between the result value after the unary/binary/n-ary calculation on the detected value and the result value threshold, and the comparison between the result value variation and the corresponding threshold. For example, when the battery pack 31 has the low output capability, only one of the first electric motor 21 or the second electric motor 22 may be driven.

As shown in FIG. 14, a control method for the power tool in the adaptive mode includes the specific steps below.

In S1501, the flow starts.

In S1502, the power tool enters the adaptive mode.

In S1503, the output capability of the battery pack 31 is determined according to the relationship between the detected value of the first detector 1761 and the preset threshold.

In S1504, the running state of the electric motor assembly 20 is switched according to the output capability of the battery pack 31.

As shown in FIG. 15, as an alternative example, the controller 174 determines the configured working mode of the power tool according to the physical quantity related to the running state of the electric motor assembly 20. For example, the control circuit includes a second detector 1762 configured to detect the physical quantity related to the operation of the electric motor assembly 20. Optionally, the physical quantity related to the operation of the electric motor assembly 20 includes electrical parameters of the first electric motor 21 and/or the second electric motor 22 and electrical parameters or physical parameters of circuit elements connected to the first electric motor 21 and/or the second electric motor 22. Optionally, the physical quantity related to the operation of the electric motor assembly 20 includes physical quantities of the first electric motor 21 and/or the second electric motor 22 that can be detected by sensors or electronic elements, such as bus currents, phase currents, bus voltages, phase voltages, and commutation parameters. Optionally, the physical quantity related to the operation of the electric motor assembly 20 includes physical quantities of the first electric motor 21 and/or the second electric motor 22 and/or the output shaft 30 that can be detected by sensors or electronic elements, such as rotational speeds, angular velocities, accelerations, and angular accelerations. Optionally, the physical quantity related to the operation of the electric motor assembly 20 includes temperatures, sounds, vibrations, and the like of the first electric motor 21 and/or the second electric motor 22. Optionally, the electrical parameters or physical parameters of the circuit elements connected to the first electric motor 21 and/or the second electric motor 22 include currents, voltages, temperatures, and vibrations of the switching elements and other capacitor or resistor elements in the driver circuit 175. For example, the physical quantity related to the running state of the electric motor assembly 20 includes a combination of one or more of the physical quantities disclosed above. For example, the physical quantity related to the running state of the electric motor assembly 20 includes a combination of one or more of the physical quantities disclosed above with time.

For example, the controller 174 determines the configured working mode of the power tool according to a relationship between a detected value of the second detector 1762 and a preset threshold. A comparison between the detected value of the second detector 1762 and the preset threshold includes a direct comparison between the detected value and a detected value threshold, a comparison between a detected value variation and a variation threshold, a comparison between a result value after a unary/binary/n-ary calculation on the detected value and a result value threshold, and a comparison between a result value variation and a corresponding threshold. Optionally, the detected value of the second detector 1762 is a current, and the controller 174 may determine the configured working mode of the power tool based on a comparison between a current value and a current value threshold. Optionally, the detected value of the second detector 1762 is the current, and the controller 174 may determine the configured working mode of the power tool based on a comparison between a variation of current values detected twice or multiple times and a current variation threshold. Optionally, the detected value of the second detector 1762 is the current, and the controller 174 may determine the configured working mode of the power tool based on a comparison between an average of current values detected twice or multiple times and a current average threshold. Optionally, the detected value of the second detector 1762 is the current, and the controller 174 may determine the configured working mode of the power tool based on a comparison between a torque value or torque variation of the electric motor calculated using the current and a relevant threshold.

In this example, a load of the output shaft 30 is determined according to the physical quantity related to the running state of the electric motor assembly 20. For example, the controller 174 determines the load of the output shaft 30 according to a rotational speed and/or a current value of the output shaft 30 and determines the configured working mode of the power tool according to the load of the output shaft 30. For example, when the power tool is in an adaptive state, if the rotational speed of the output shaft 30 is higher than a first set threshold and/or the current of the electric motor (the first electric motor 21 and/or the second electric motor 22) is lower than a first set threshold and/or a rotational speed variation of the output shaft 30 is lower than a first set threshold, the output shaft 30 is in a low load condition, and the controller 174 determines that the power tool switches to and operates in the second working mode. If the rotational speed of the output shaft 30 is lower than a second set threshold and/or the current of the electric motor (the first electric motor 21 and/or the second electric motor 22) is higher than a second set threshold and/or the rotational speed variation of the output shaft 30 is higher than a second set threshold, the output shaft 30 is in a high load condition, and the controller 174 determines that the power tool switches to and operates in the first working mode. For the rotational speed, the first set threshold is not less than the second set threshold. For the current, the first set threshold is not greater than the second set threshold. For the rotational speed variation, the first set threshold is not lower than the second set threshold.

When the mode selection module 177 of the controller 174 determines that the power tool switches to and operates in the first working mode or the second working mode, the switching signal is used as the input instruction, and the controller 174, in response to the switching signal, determines that the electric motor assembly 20 operates in the state corresponding to the first working mode or the second working mode. Optionally, after the electric motor assembly 20 enters a first working state or a second working state, the running states of the first electric motor and/or the second electric motor may be dynamically adjusted according to a detection result of the second detector 1762. Optionally, when the mode selection module 177 of the controller 174 determines that the power tool switches to and operates in the first working mode or the second working mode, the controller 174 calls the corresponding input instruction in response to the switching signal and, in response to the called input instruction, determines one or more groups of preset drive parameters corresponding to the input instruction and drives the electric motor assembly 20 to operate in the state corresponding to the first working mode or the second working mode.

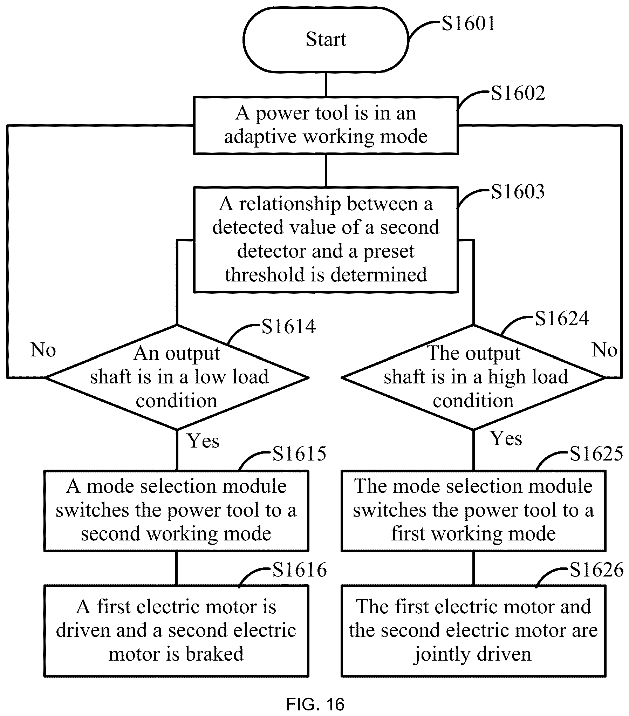

FIG. 16 shows a control method for the power tool, where the power tool switches between the working modes through electronic identification, the controller 174 includes the mode selection module 177, and the mode selection module 177 determines the configured working mode of the power tool according to the physical quantity related to the running state of the electric motor assembly 20. The method specifically includes the steps below.

In S1601, the flow starts.

In S1602, the power tool enters the adaptive working mode.

In S1603, the relationship between the detected value of the second detector 1762 and the preset threshold is determined.

The second detector 1762 detects the physical quantity related to the operation of the electric motor assembly 20, and the controller 174 determines the configured working mode of the power tool according to the relationship between the detected value of the second detector 1762 and the preset threshold. The load of the output shaft 30 is determined according to the physical quantity related to the running state of the electric motor assembly 20.

In S1614, the output shaft 30 is in the low load condition. If so, S1615 is performed. If not, S1602 is performed.

When the rotational speed of the output shaft 30 is higher than the first set threshold and/or the current of the electric motor (the first electric motor 21 and/or the second electric motor 22) is lower than the first set threshold and/or the rotational speed variation of the output shaft 30 is lower than the first set threshold, the output shaft 30 is in the low load condition.

In S1615, the mode selection module 177 switches the power tool to the second working mode.

In S1616, the first electric motor is driven and the second electric motor is braked.

The first electric motor is driven and the second electric motor is braked according to the drive parameters, and the drive parameters may be one or more groups of preset drive parameter data or may be drive parameter data dynamically adjusted according to the detection result of the second detector 1762.

In S1624, the output shaft is in the high load condition. If so, S1625 is performed. If not, S1602 is performed.

When the rotational speed of the output shaft 30 is lower than the second set threshold and/or the current of the electric motor (the first electric motor 21 and/or the second electric motor 22) is higher than the second set threshold and/or the rotational speed variation of the output shaft 30 is higher than the second set threshold, the output shaft 30 is in the high load condition.

In S1625, the mode selection module 177 switches the power tool to the first working mode.

In S1626, the first electric motor and the second electric motor are jointly driven.

The first electric motor and the second electric motor are jointly driven according to the preset drive parameters, and the drive parameters may be one or more groups of preset drive parameter data or may be drive parameter data dynamically adjusted according to the detection result of the second detector 1762.

In some examples, in the adaptive mode, the controller 174 dynamically adjusts the running states of the first electric motor 21 and the second electric motor 22 according to the physical quantity related to the running state of the electric motor assembly 20 and detected by the second detector 1762. For example, the controller 174 determines, according to the relationship between the detected value of the second detector 1762 and the preset threshold, that the second electric motor 22 is driven or on standby. The comparison between the detected value of the detector 176 and the preset threshold includes the direct comparison between the detected value and the detected value threshold, the comparison between the detected value variation and the variation threshold, the comparison between the result value after the unary/binary/n-ary calculation on the detected value and the result value threshold, and the comparison between the result value variation and the corresponding threshold. For example, the physical quantity related to the operation of the electric motor assembly 20 includes the physical quantities of the first electric motor 21 and/or the second electric motor 22 that can be detected by the sensors or the electronic elements, such as the bus currents, the phase currents, the bus voltages, the phase voltages, and the commutation parameters. Optionally, the physical quantity related to the operation of the electric motor assembly 20 includes the physical quantities of the first electric motor 21 and/or the second electric motor 22 and/or the output shaft 30 that can be detected by the sensors or the electronic elements, such as the rotational speeds, the angular velocities, the accelerations, and the angular accelerations. Optionally, the physical quantity related to the operation of the electric motor assembly 20 includes the temperatures, the sounds, the vibrations, and the like of the first electric motor 21 and/or the second electric motor 22. Optionally, the electrical parameters or physical parameters of the circuit elements connected to the first electric motor 21 and/or the second electric motor 22 include the currents, the voltages, the temperatures, and the vibrations of the switching elements and other capacitor or resistor elements in the driver circuit 175. For example, the physical quantity related to the running state of the electric motor assembly 20 includes a combination of one or more of the physical quantities disclosed above. For example, the physical quantity related to the running state of the electric motor assembly 20 includes a combination of one or more of the physical quantities disclosed above with time.

In some examples, as shown in FIG. 6, the power tool further includes a visual control system 75 connected to the controller 174. Before the power tool contacts a workpiece to be machined, the visual control system 75 is configured to determine a working condition matching the workpiece and send a corresponding input instruction to the controller 174, and the controller 174 matches a corresponding working mode according to the input instruction. For example, a workpiece to be cut is a wooden board whose thickness exceeds a threshold, and the visual control system 75 is disposed at a forward end of the power tool. The visual control system 75 identifies that the thickness of the workpiece to be cut exceeds a standard and sends an input signal for configuring the power tool to work in the first working mode to the controller 174, and the controller 174 configures, according to the input signal, the power tool to prepare for working or enter a working state in the first working mode. In some examples, in the adaptive working mode, the controller 174 dynamically adjusts the running states of the first electric motor 21 and the second electric motor 22 according to a condition of the workpiece to be cut that is detected by the visual control system. For example, the workpiece to be cut is the wooden board whose thickness exceeds the threshold. The visual control system identifies that the thickness of the workpiece to be cut exceeds the standard and sends a signal for configuring the electric motor assembly 20 to work with the first electric motor 21 and the second electric motor 22 jointly driven to the controller 174. For example, the workpiece to be cut is a wooden board whose thickness is less than the threshold. The visual control system 75 identifies that the thickness of the workpiece to be cut is very thin and sends a signal for configuring the electric motor assembly 20 to work with the first electric motor 21 driven alone to the controller 174.

For example, the visual control system 75 includes a light source, a lens, a charge-coupled device (CCD) camera, an image processing unit (or image acquisition card), an image processing chip, a monitor, and a communication/input and output unit. The visual control system 75 is the same as the technical solution disclosed in the related art. The visual control system has been fully disclosed to those skilled in the art, and thus a detailed description is omitted here for the sake of clarity.

As shown in FIGS. 2 to 5, the power transmission mechanism 40 includes a transmission assembly 41 disposed between the output shaft 30 and at least one of the first electric motor 21 or the second electric motor 22. The transmission assembly 41 includes at least a deceleration mechanism. A clutch assembly 42 is disposed between the first electric motor 21 and the second electric motor 22, and the clutch assembly 42 is configured to allow or not allow at least one of the first drive shaft 211 or the second drive shaft 221 to drive the output shaft 30 under a preset condition. It is to be understood that the clutch assembly 42 is disposed between the first electric motor 21 and the second electric motor 22. In one aspect, in terms of orientations, the clutch assembly 42 at least partially overlaps any one of the first electric motor 21 and the second electric motor 22 in an axial direction of the drive shafts or at least partially overlaps any one of the first electric motor 21 and the second electric motor 22 in a radial direction of the drive shafts. In the other aspect, in terms of a connection relationship, the clutch assembly 42 is directly or indirectly connected to the first electric motor 21 and the second electric motor 22 separately; or a direct or indirect power transmission path exists between the clutch assembly 42 and the first electric motor 21 and a direct or indirect power transmission path exists between the clutch assembly 42 and the second electric motor 22.

In this example, the clutch assembly 42 includes a one-way clutch 421. The one-way clutch 421 is operable to connect the rotation of the first electric motor 21 to the rotation of the second electric motor 22 in a first direction of rotation and disconnect the rotation of the first electric motor 21 from the rotation of the second electric motor 22 in a second direction of rotation. Optionally, the clutch assembly 42 is a one-way bearing or an overrunning clutch.

The second electric motor 22 collaborates with the first electric motor 21 through the one-way clutch 421. When the first electric motor 21 and the second electric motor 22 rotate in the same direction, if the rotational speed of the second drive shaft 221 of the second electric motor 22 is lower than the rotational speed of the first drive shaft 211 of the first electric motor 21, the one-way clutch 421 prevents the second drive shaft 221 from driving the output shaft 30. During an increase in the rotational speed of the second drive shaft 221 of the second electric motor 22, the one-way clutch is driven by a meshing force of the second electric motor until the one-way clutch meshes to allow the first drive shaft and the second drive shaft to jointly drive the output shaft. When the rotational speed of the second drive shaft 221 of the second electric motor 22 is higher than or equal to the rotational speed of the first drive shaft 211 of the first electric motor 21, the one-way clutch 421 allows the second drive shaft 221 to participate in driving the output shaft 30. In a process from when the one-way clutch 421 prevents the second drive shaft 221 from driving the output shaft 30 to when the one-way clutch 421 allows the second drive shaft 221 to drive the output shaft 30, the rotational speed of the output shaft 30 undergoes a process from being lower than the output rotational speed of the first electric motor 21 to being greater than or equal to the output rotational speed of the first electric motor 21. When the rotational speed of the first drive shaft 211 of the first electric motor 21 is equal to the rotational speed of the second drive shaft 221 of the second electric motor 22 for the first time, the one-way clutch 421 hits to mesh and then outputs torque. However, the greater the meshing force of the second electric motor applied to the one-way clutch before the hit, the stronger the impulse of the hit on the one-way clutch. Moreover, the applicant has found that the meshing force of the second electric motor is affected by a difference between the rotational speed of the first drive shaft 211 of the first electric motor 21 and the rotational speed of the second drive shaft 221 of the second electric motor 22 when the one-way clutch meshes. The greater the difference between the rotational speed of the first drive shaft 211 of the first electric motor 21 and the rotational speed of the second drive shaft 221 of the second electric motor 22, that is to say, the faster the second drive shaft 221 of the second electric motor 22 rotates, the greater the meshing force of the second drive shaft 221, the stronger the impulse of the hit on the one-way clutch, and the faster a service life of the clutch decays.

In this example, the controller 174 is configured to drive the first drive shaft 211 of the first electric motor 21 to rotate at a first rotational speed and when a second rotational speed of the second drive shaft 221 of the second electric motor 22 is lower than the first rotational speed, adjust a drive force parameter affecting the meshing force of the second electric motor 22 on the clutch assembly 42 according to a difference between the second rotational speed and the first rotational speed. In this example, the drive force parameter of the second electric motor 22 includes the rotational speed of the second drive shaft 221, the acceleration of the second drive shaft 221, the angular velocity of the second drive shaft 221, the angular acceleration of the second drive shaft 221, the torque of the second drive shaft 221, the current of the second electric motor 22, the voltage of the second electric motor 22, commutation data of the second electric motor 22, and values after unary/binary/n-ary calculations of the above data.

In this example, the drive force parameter affecting the meshing force of the second electric motor 22 on the clutch assembly 42 is adjusted according to the difference between the second rotational speed and the first rotational speed, so as to adjust a hit force when the clutch meshes and increase the service life of the clutch.

In this example, when the difference between the second rotational speed and the first rotational speed is greater than or equal to a preset difference, the second electric motor 22 increases the rotational speed according to a first drive force parameter corresponding to a first meshing force. When the difference between the second rotational speed and the first rotational speed is less than the preset difference, the second electric motor 22 increases the rotational speed according to a second drive force parameter corresponding to a second meshing force, where the second meshing force is smaller than the first meshing force. In this example, when the difference between the rotational speed of the first drive shaft 211 of the first electric motor 21 and the rotational speed of the second drive shaft 221 of the second electric motor 22 is greater than the preset difference, the second electric motor 22 is driven with the larger first meshing force to rapidly increase the speed and reduce the rotational speed difference between the first electric motor 21 and the second electric motor 22. When the difference between the rotational speed of the first drive shaft 211 of the first electric motor 21 and the rotational speed of the second drive shaft 221 of the second electric motor 22 is less than or equal to the preset difference, the rotational speed of the second electric motor 22 is close to the rotational speed of the first electric motor 21, the one-way clutch 421 is about to mesh, and the meshing force of the second electric motor 22 is reduced, thereby reducing the hit force on the one-way clutch 421 during meshing, protecting the one-way clutch 421, and extending the service life of the one-way clutch 421. The second electric motor 22 is gently started so that the instantaneous noise and vibration when the second electric motor 22 participates in driving can be reduced.

In this example, the drive force parameter is the acceleration of the second drive shaft 221 of the second electric motor 22, for example, and the acceleration of the second electric motor 22 is adjusted according to the difference between the second rotational speed and the first rotational speed. The acceleration of the second electric motor 22 is adjusted so that the speed increase rate of the second electric motor 22 is reduced, and the meshing force of the second electric motor 22 is reduced.

In this example, when the difference between the second rotational speed and the first rotational speed is greater than or equal to the preset difference, the second electric motor 22 increases the rotational speed according to a first acceleration. When the difference between the second rotational speed and the first rotational speed is less than the preset difference, the second electric motor 22 increases the rotational speed according to a second acceleration, where the second acceleration is less than the first acceleration. In this example, when the difference between the rotational speed of the first drive shaft 211 of the first electric motor 21 and the rotational speed of the second drive shaft 221 of the second electric motor 22 is greater than the preset difference, the second electric motor 22 has the larger acceleration to rapidly increase the speed and reduce the rotational speed difference between the first electric motor 21 and the second electric motor 22. When the difference between the rotational speed of the first drive shaft 211 of the first electric motor 21 and the rotational speed of the second drive shaft 221 of the second electric motor 22 is less than or equal to the preset difference, the rotational speed of the second electric motor 22 is close to the rotational speed of the first electric motor 21, the one-way clutch 421 is about to mesh, and the acceleration of the second electric motor 22 is reduced so that the speed increase rate of the second electric motor 22 is reduced, thereby reducing the hit force on the one-way clutch 421 during meshing, protecting the one-way clutch 421, and extending the service life of the one-way clutch 421.

In this example, the second electric motor 22 increases the rotational speed so that the clutch assembly 42 allows the first drive shaft 211 and the second drive shaft 221 to jointly drive the output shaft 30. For example, the second electric motor 22 increases the rotational speed according to the second acceleration so that the second rotational speed is equal to the first rotational speed. When the clutch assembly 42 allows the first drive shaft 211 and the second drive shaft 221 to drive the output shaft 30, the clutch assembly 42, such as the one-way clutch 421, has completed the meshing, and the second rotational speed of the second electric motor 22 is higher than or equal to the first rotational speed of the first electric motor 21 according to an actual working condition of the product and a preset parameter setting.

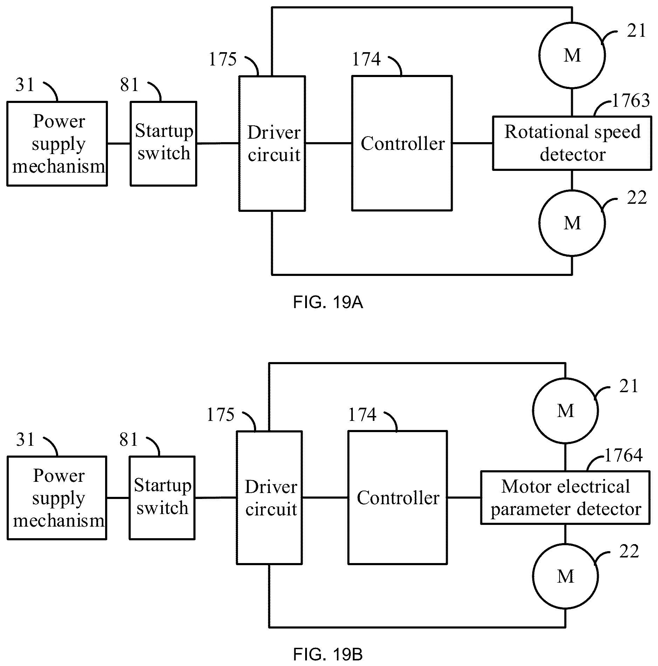

For example, as shown in FIG. 19A, the power tool further includes a rotational speed detector 1763 configured to detect values related to the rotational speed of the first drive shaft 211 of the first electric motor 21 and the rotational speed of the second drive shaft 221 of the second electric motor 22. For example, a value related to the rotational speed includes a rotational speed value, a rotational speed variation, a result value after a unary/binary/n-ary calculation of a detected value, or a result value variation. For example, the rotational speed detector 1763 is a position sensor that detects the rotational speed of the first drive shaft 211 and/or the rotational speed of the second drive shaft 221. For example, the rotational speed detector 1763 detects the angular velocities, accelerations, or angular accelerations of the first drive shaft 211 and/or the second drive shaft 221 to calculate the rotational speed of the first drive shaft 211 and/or the rotational speed of the second drive shaft 221. Optionally, the rotational speed detector 1763 includes the position sensor, which may specifically be a photodiode sensor, a magnetic sensor, or a potentiometer. Alternatively, the rotational speed detector 1763 may be a rotation sensor, which is specifically a gyroscope sensor. The gyroscope sensor may be a single-axis, dual-axis, or three-axis microelectromechanical system (MEMS) sensor or a rotary sensor.

In some examples, as shown in FIG. 19B, the power tool further includes a motor electrical parameter detector 1764 configured to detect the electrical parameters of the first electric motor 21 and the second electric motor 22 to characterize the rotational speed of the first drive shaft 211 and the rotational speed of the second drive shaft 221, where the electrical parameters include current-related parameters, voltage-related parameters, and commutation-related parameters. Optionally, the power tool includes the rotational speed detector 1763 and the motor electrical parameter detector 1764. That is to say, parameters of the first drive shaft 211 of the first electric motor 21 and parameters of the second drive shaft 221 of the second electric motor 22 of the power tool may be detected by the rotational speed detector 1763 and the motor electrical parameter detector 1764, separately.

In some alternative examples, the clutch assembly 42 may be another mechanical clutch assembly. For example, the clutch assembly may include a dog clutch, a ratchet clutch, a centrifugal clutch, a differential, a friction clutch, or a hydrodynamic clutch. The preceding mechanical clutches in simple modifications or combinations may be used as the clutch assembly of the present application. On the premise that the function of the clutch assembly of the present application can be implemented, the specific form of structure does not affect the substantive content of the present application.

In some examples, the clutch assembly 42 further includes an electronic clutch. For example, the clutch assembly includes an electromagnetic clutch. For example, the electromagnetic clutch may be a dry single-plate electromagnetic clutch, a dry multi-plate electromagnetic clutch, a wet multi-plate electromagnetic clutch, a magnetic particle clutch, or a slip electromagnetic clutch.

In some examples, the mechanical clutch assembly and the electronic clutch may be coupled, thereby allowing or not allowing at least one of the first drive shaft 211 or the second drive shaft 221 to drive the output shaft 30 under the preset condition.

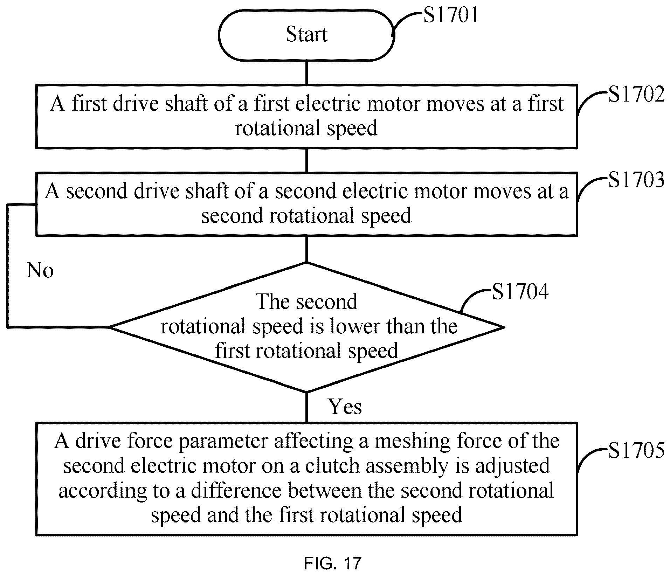

As shown in FIG. 17, a method for controlling the rotational speeds of the first electric motor and the second electric motor of the power tool includes the specific steps below.

In S1701, the flow starts.

In S1702, the first drive shaft 211 of the first electric motor 21 rotates at the first rotational speed.

In S1703, the second drive shaft 221 of the second electric motor 22 rotates at the second rotational speed.

In S1704, the second rotational speed is lower than the first rotational speed. If so, S1705 is performed. If not, S1703 is performed.

In S1705, the drive force parameter affecting the meshing force of the second electric motor on the clutch assembly is adjusted according to the difference between the second rotational speed and the first rotational speed.

The drive force parameter of the meshing force of the second electric motor 22 is adjusted so that the hit force during the meshing of the clutch is adjusted to extend the service life of the clutch.

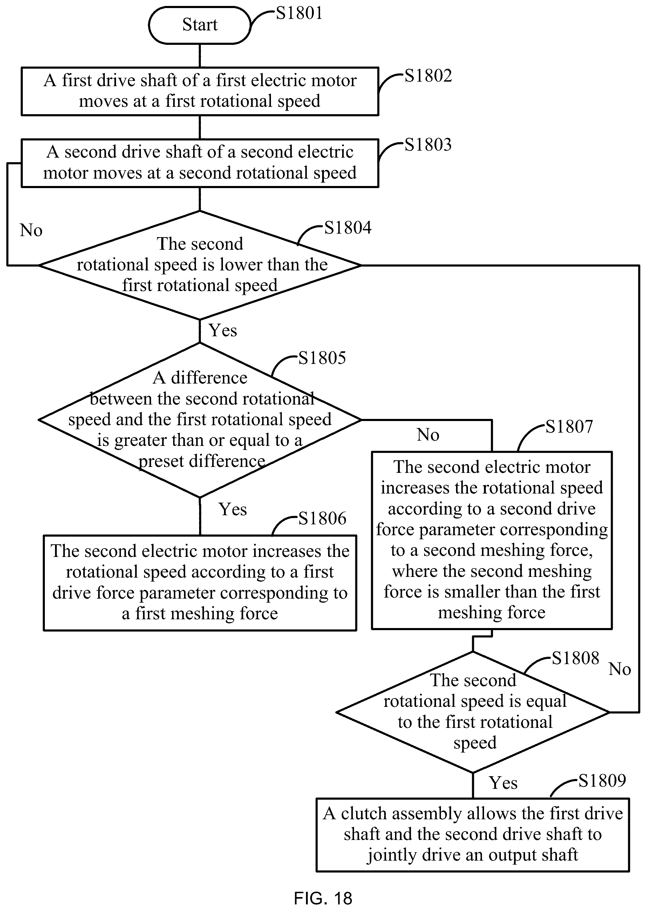

As shown in FIG. 18, another method for controlling the rotational speeds of the first electric motor and the second electric motor of the power tool includes the specific steps below.

In S1801, the flow starts.

In S1802, the first drive shaft 211 of the first electric motor 21 rotates at the first rotational speed.

In S1803, the second drive shaft 221 of the second electric motor 22 rotates at the second rotational speed.

In S1804, the second rotational speed is lower than the first rotational speed. If so, S1805 is performed. If not, S1803 is performed.

In S1805, the difference between the second rotational speed and the first rotational speed is greater than or equal to the preset difference. If so, S1806 is performed. If not, S1807 is performed.

In S1806, the second electric motor increases the rotational speed according to the first drive force parameter corresponding to the first meshing force.

In S1807, the second electric motor increases the rotational speed according to the second drive force parameter corresponding to the second meshing force, where the second meshing force is smaller than the first meshing force.

When the difference between the rotational speed of the first drive shaft 211 of the first electric motor 21 and the rotational speed of the second drive shaft 221 of the second electric motor 22 is greater than the preset difference, the second electric motor 22 is driven with the larger first meshing force to rapidly increase the speed and reduce the rotational speed difference between the first electric motor 21 and the second electric motor 22. When the difference between the rotational speed of the first drive shaft 211 of the first electric motor 21 and the rotational speed of the second drive shaft 221 of the second electric motor 22 is less than or equal to the preset difference, the rotational speed of the second electric motor 22 is close to the rotational speed of the first electric motor 21, the one-way clutch 421 is about to mesh, and the meshing force of the second electric motor 22 is reduced, thereby reducing the hit force on the one-way clutch 421 during meshing, protecting the one-way clutch 421, and extending the service life of the one-way clutch 421.

In S1808, the second rotational speed is equal to the first rotational speed. If so, S1809 is performed. If not, S1804 is performed.

In S1809, the clutch assembly allows the first drive shaft and the second drive shaft to jointly drive the output shaft.

The second electric motor 22 increases the rotational speed according to the second acceleration so that the second rotational speed is equal to the first rotational speed. When the clutch assembly 42 allows the first drive shaft 211 and the second drive shaft 221 to drive the output shaft 30, the clutch assembly 42, such as the one-way clutch 421, has completed the meshing.

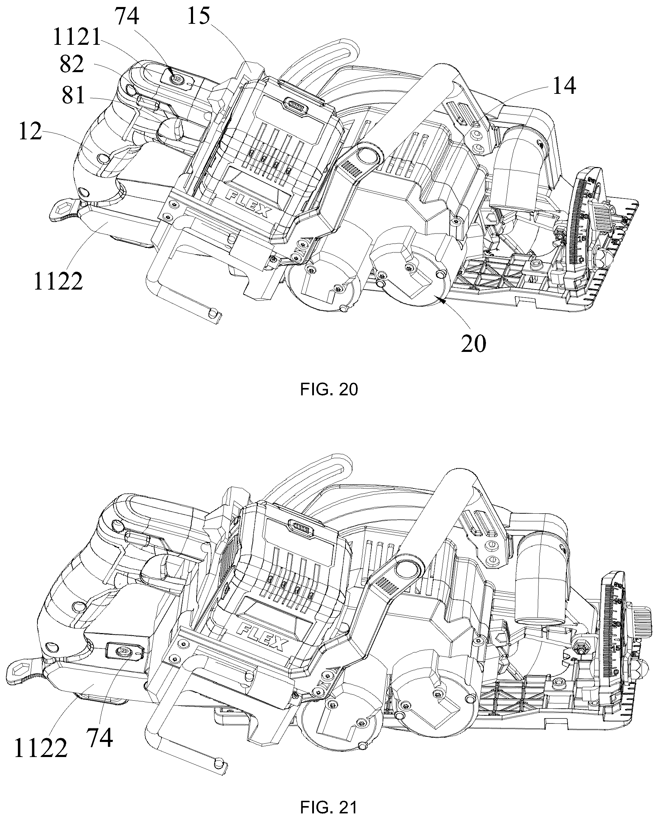

As shown in FIGS. 20 to 23, when the power tool switches between the working modes in the manual mode, the mode switching portion 73 includes the switching element defined as the mode switching switch 74, and the mode switching switch 74 is connected to the controller 174 and operated to send a signal for switching the working mode to the controller 174. The power tool switches between at least the adaptive mode and the first working mode in the manual mode, and the user can actively switch the working mode according to usage habits and specific usage requirements. Compared with the automatic switching between the working modes through electronic identification, the manual switching provides the user with a stronger sense of operation and enables use in special working conditions, thereby making up for a lack of use manners of the product that only has the adaptive mode or that can only switch between single-motor and dual-motor working modes and providing richer working conditions.

In this example, the mode switching switch 74 and a startup switch 81 are different switching elements. That is to say, when the power tool switches between the working modes in the manual mode, the power tool is provided with the mode switching switch 74 disposed separately so that the user can conveniently and intuitively operate the mode switching switch 74. In some examples, the startup switch 81 of the circular saw 100 can be triggered only when a safety switch 82 is pressed, while the mode switching switch 74 is disposed separately and is not limited by the safety switch 82. In some examples, the mode switching switch 74 and the startup switch 81 are different switching elements, the mode switching switch 74 and the startup switch 81 are disposed at different positions, and the mode switching switch 74 and the startup switch 81 are separately connected to the controller 174.

In some examples, the mode switching switch 74 is disposed on an outer wall surface of a body housing 11. The body housing 11 includes an accommodation housing 14 configured to accommodate the first electric motor 21 and the second electric motor 22. It is to be understood that the accommodation housing 14 accommodates the electric motor assembly 20 and the accommodation housing 14 accommodates the drive shafts of the electric motors.

The body housing 11 further includes a connection portion 112 for connecting a grip 12 to the accommodation housing 14, the startup switch 81 is located on the grip 12, and the mode switching switch 74 is located on the connection portion 112 or the accommodation housing 14. For example, as shown in FIG. 20, the connection portion 112 includes an upper connection portion 1121 connected between the upper end of the grip 12 and the accommodation housing 14, the upper connection portion 1121 is close to the startup switch 81, and the mode switching switch 74 is disposed on the upper connection portion 1121. Optionally, the mode switching switch 74 is disposed on an upper surface or a side surface of the upper connection portion 1121. Optionally, the mode switching switch 74 is disposed at such a position that the mode switching switch 74 and the startup switch 81 can both be operated with a single hand. For example, as shown in FIG. 21, the connection portion 112 includes a lower connection portion 1122 connected between the lower end of the grip 12 and the accommodation housing 14, the lower connection portion 1122 is close to a base plate 51, and the mode switching switch 74 is disposed on an upper surface or a side surface of the lower connection portion 1122. This facilitates operations of the user and avoids accidental touch.

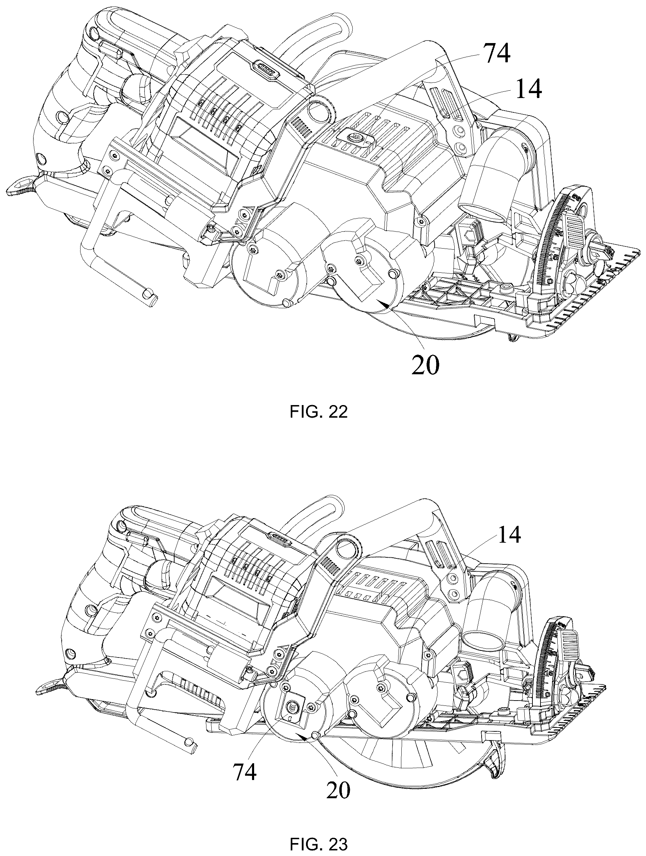

For example, the mode switching switch 74 is disposed on an outer side surface of the accommodation housing 14. For example, as shown in FIGS. 22 and 23, the accommodation housing 14 surrounds the outer perimeter of stators of the electric motors, and the mode switching switch 74 is disposed on an outer sidewall of the outer perimeter or an end of the stators of the electric motors. For example, the accommodation housing 14 extends towards a fixed guard 62 along an extension direction of the drive shafts of the electric motors, and the mode switching switch 74 is disposed on an outer sidewall of the outer perimeter of the drive shafts of the electric motors 21 and 22.

In this example, as shown in FIG. 6, the battery pack 31 is disposed between the electric motor assembly 20 and the grip 12 for holding so that the position of the center of gravity of the circular saw 100 is in conformity with the operations of the user, and the circular saw 100 can be stabilized during the operations. The body housing 11 is provided with a semi-open battery accommodation compartment 15 which is recessed inward. In this example, the accommodation housing 14 is connected to the battery accommodation compartment 15, the battery accommodation compartment 15 is connected to the connection portion 112, and the battery accommodation compartment 15 and the electric motor assembly 20 are disposed on the same side.

The battery accommodation compartment 15 includes a coupling portion 1511 electrically connected to the battery pack 31, and the coupling portion 1511 is provided with tool terminals. The tool terminals with the same structures (not shown in the figure) are provided on different power tools. For example, the first electric motor 21, the second electric motor 22, the battery pack 31, and the grip 12 are disposed on the same side of the cutting part 61, and after the battery pack 31 is inserted into the battery accommodation compartment 15, the battery pack 31 is at least partially disposed behind the first electric motor 21 and the second electric motor 22 and at least partially disposed in front of the grip 12. Optionally, the battery pack 31 is inserted obliquely into the battery accommodation compartment 15. In some examples, the battery pack 31 is partially located above the first electric motor 21 and the second electric motor 22.

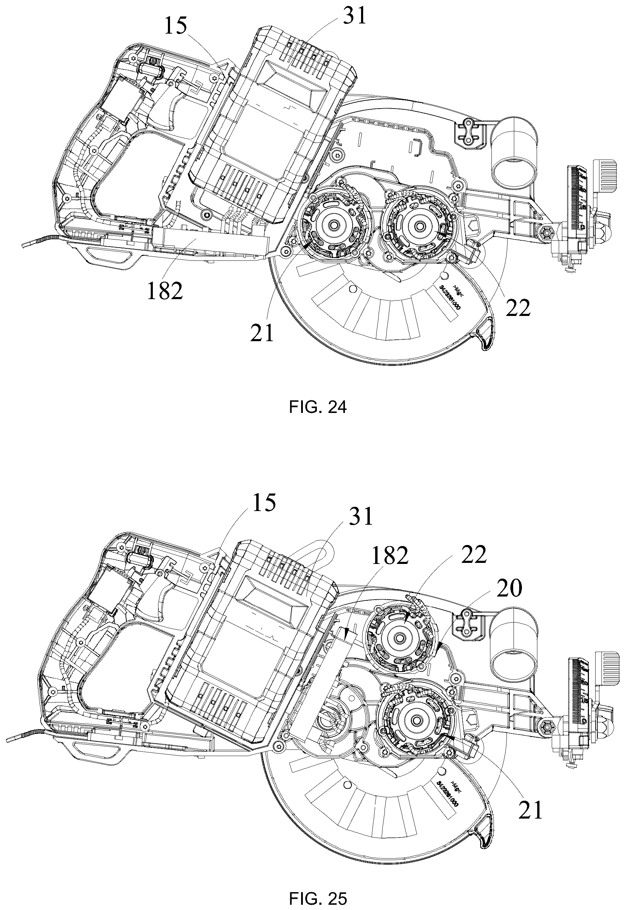

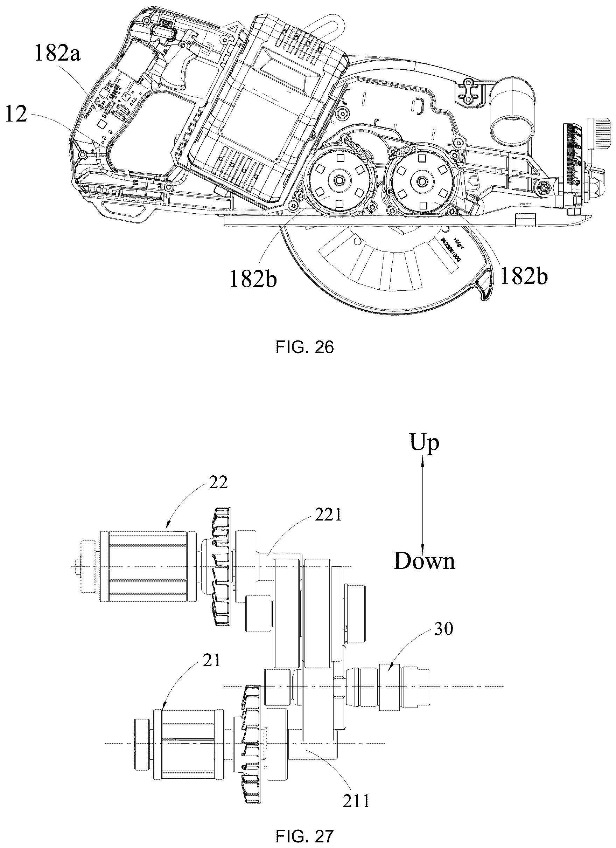

As shown in FIG. 24, the control circuit board 182 is at least partially disposed below the battery pack 31. For example, the control circuit board 182 is at least partially disposed below the battery accommodation compartment 15. The control circuit board 182 is at least partially disposed on a radial outer side of the electric motor assembly 20. Optionally, as shown in FIG. 6, the control circuit board 182 is at least partially disposed on the upper side of the electric motor assembly 20. Optionally, as shown in FIG. 25, the control circuit board 182 is at least partially disposed between the electric motor assembly 20 and the battery pack 31. Optionally, the control circuit board 182 is at least partially located between the electric motor assembly 20 and the battery accommodation compartment 15. As shown in FIG. 26, the control circuit board 182 is at least partially disposed in the grip 12. For example, multiple control circuit boards 182 are provided, and at least part of the control circuit boards 182 are disposed in housings at ends of the electric motors 21 and 22. Optionally, multiple control circuit boards 182 are provided, one control circuit board 182a is disposed in the grip 12, and the remaining control circuit boards 182b are disposed at an end of the first drive shaft 211 of the first electric motor 21 facing away from the cutting part and an end of the second drive shaft 221 of the second electric motor 22 facing away from the cutting part, respectively.

Arrangements of the first electric motor 21 and the second electric motor 22 in the electric motor assembly 20 are described below. In this example, the first drive shaft 211 of the first electric motor 21 and the second drive shaft 221 of the second electric motor 22 are arranged along a radial direction of the first drive shaft 211, that is to say, the first electric motor 21 and the second electric motor 22 are arranged non-coaxially. In some examples of this example, the first drive shaft 211 and the second drive shaft 221 are parallel and do not coincide. In this example, the first drive shaft 211 and the second drive shaft 221 are both parallel to the output shaft 30. In some examples, as shown in FIG. 6, the first drive shaft 211 and the second drive shaft 221 are arranged along the front and rear direction.

In some examples, as shown in FIGS. 25 and 27, the first drive shaft 211 and the second drive shaft 221 are arranged along the up and down direction, that is to say, the first electric motor 21 is located above the second electric motor 22 or the second electric motor 22 is located above the first electric motor 21.

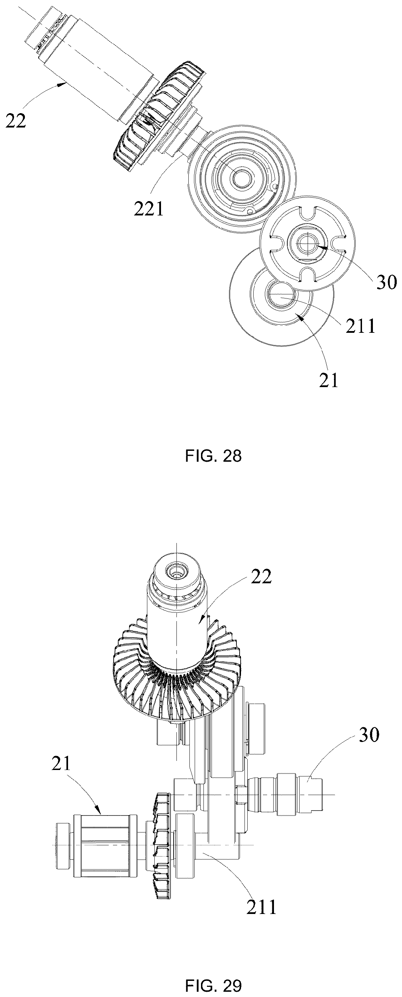

As shown in FIGS. 28 and 29, in some examples, the first drive shaft 211 and the second drive shaft 221 intersect or are perpendicular. For example, the first drive shaft 211 and the second drive shaft 221 are spatially perpendicular or spatially intersect. For example, when projections of the electric motor assembly 20 are observed along the up and down direction, a projection of the first drive shaft 211 intersects or is perpendicular to a projection of the second drive shaft 221.

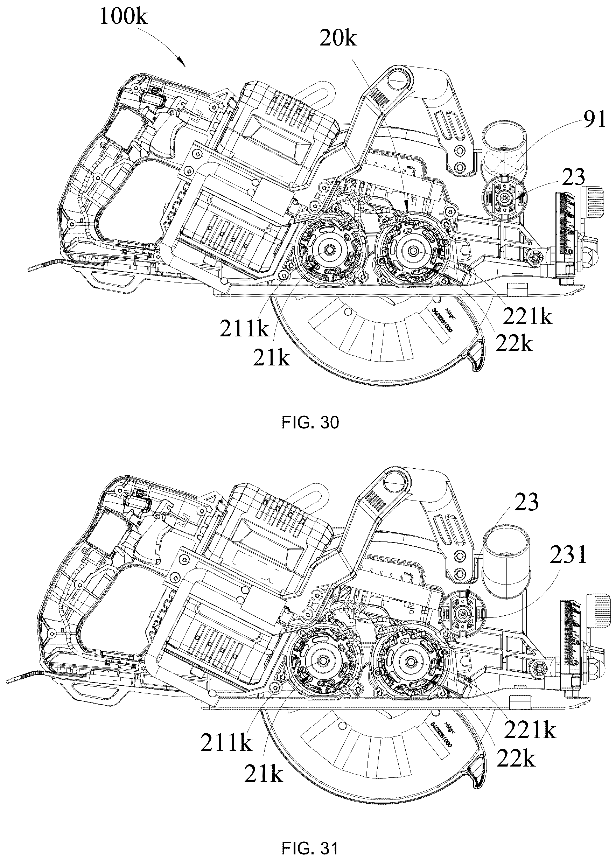

As shown in FIGS. 30 and 31, another example of the present application provides a circular saw 100k and differs from the first example in that an electric motor assembly 20k includes multiple electric motors. For example, the electric motor assembly 20k includes at least a first electric motor 21k and a second electric motor 22k, and torque of a first drive shaft 211k and torque of a second drive shaft 221k are output through an output shaft 30k. The electric motor assembly 20k further includes the third electric motor 23 configured to power components other than the output shaft 30k. In some examples, as shown in FIG. 30, the circular saw 100k further includes a dust suction fan 91, and the third electric motor 23 drives the dust suction fan 91 to rotate, so as to generate a suction force and perform dust collection.

In some examples, the electric motor assembly 20k further includes a first fan 216 and a second fan 226 shown in FIG. 2. The first fan 216 is supported by the first drive shaft 211k and driven by the first electric motor 21k to rotate and generate a cooling airflow. The second fan 226 is supported by the second drive shaft 221k and driven by the second electric motor 22k to rotate and generate a cooling airflow. As shown in FIG. 18, an auxiliary cooling fan is further included, and the third electric motor 23 drives the auxiliary cooling fan (not shown) to rotate to generate a wind for heat dissipation of the electric motor assembly 20k and/or the controller 174, thereby improving the heat dissipation efficiency of the electric motors. In some examples, the first drive shaft 211k of the first electric motor 21k and a third drive shaft 231 of the third electric motor 23 are arranged along the radial direction of the first drive shaft 211k, that is to say, the first electric motor 21k and the third electric motor 23 are arranged non-coaxially. In some examples of this example, the first drive shaft 211k and the third drive shaft 231 are parallel and do not coincide. In this example, the first drive shaft 211k and the second drive shaft 221k are both parallel to the third drive shaft 231. In some examples, the first drive shaft 211k and the third drive shaft 231 are arranged along the left and right direction. In some examples, the first drive shaft 211k and the third drive shaft 231 are arranged along the up and down direction, that is to say, the first electric motor 21k is located above the third electric motor 23 or the third electric motor 23 is located above the first electric motor 21k. In some examples, the first drive shaft 211k and the third drive shaft 231 intersect or are perpendicular. For example, the first drive shaft 211k and the third drive shaft 231 are spatially perpendicular or spatially intersect. For example, when projections of the electric motor assembly 20k are observed along the up and down direction, a projection of the first drive shaft 211k intersects or is perpendicular to a projection of the third drive shaft 231.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising:
an output shaft (30) configured to output torque and rotating about an output axis (301);
an electric motor assembly (20) comprising at least a first electric motor (21) and a second electric motor (22), wherein the first electric motor comprises a first drive shaft (211) rotating about a first axis (201), the second electric motor comprises a second drive shaft (221) rotating about a second axis (202), and torque of the first drive shaft and torque of the second drive shaft is output through the output shaft;
a power supply (31) configured to supply operating power to the electric motor assembly; and
a controller (174) configured to control operation of the electric motor assembly;
wherein the power tool comprises switchable working modes, and the working modes comprise:
an adaptive mode, in which the controller switches a running state of the electric motor assembly according to an identification result of a detector, wherein the running state of the electric motor assembly comprises that only the first electric motor or only the second electric motor is driven or that the first electric motor and the second electric motor are jointly driven; and
a first working mode, in which the controller makes the first electric motor and the second electric motor jointly driven in response to an input instruction.

2. The power tool according to claim 1, wherein the working modes further comprise a second working mode, in which the controller drives the first electric motor and brakes the second electric motor in response to an input instruction.

3. The power tool according to claim 2, further comprising a mode switching portion (73) that receives a switching instruction input by a user and sends a signal for executing the adaptive mode, the first working mode, or the second working mode.

4. The power tool according to claim 3, wherein the mode switching portion comprises a switching element that receives the switching instruction input by the user, and the switching element comprises at least one of a mechanical switch or an electronic switch.

5. The power tool according to claim 4, further comprising a startup switch (81) configured to be operated so that the electric motor assembly is energized, wherein the mode switching portion and the startup switch are different switching elements.

6. The power tool according to claim 2, wherein the controller further comprises a mode selection module (177) that automatically switches a configured working mode of the power tool according to a parameter identification result.

7. The power tool according to claim 6, wherein the mode selection module determines a load of the output shaft according to a physical quantity related to the running state of the electric motor assembly, and the controller determines running states of the first electric motor and the second electric motor according to the load of the output shaft.

8. The power tool according to claim 6, wherein the power supply comprises a battery pack, and the mode selection module determines a configured working mode of the power tool according to a physical quantity related to a running state of the battery pack.

9. The power tool according to claim 8, wherein when the battery pack is determined to have a high output capability according to the physical quantity related to the running state of the battery pack, the controller determines that the power tool operates in the first working mode.

10. The power tool according to claim 8, wherein when the battery pack is determined to have a medium output capability according to the physical quantity related to the running state of the battery pack, the controller determines that the power tool operates in the adaptive mode.

11. The power tool according to claim 8, wherein when the battery pack is determined to have a low output capability according to the physical quantity related to the running state of the battery pack, the controller determines that the power tool operates in the second working mode.

12. The power tool according to claim 2, wherein the power supply comprises a battery pack, and the controller determines, according to a physical quantity related to a running state of the battery pack, whether to respond to a configuration signal of a working mode of the power tool.

13. The power tool according to claim 12, wherein when the battery pack is determined to have a low output capability according to the physical quantity related to the running state of the battery pack, the controller responds only to a configuration signal of the second working mode.

14. The power tool according to claim 12, wherein when the battery pack is determined to have a medium output capability according to the physical quantity related to the running state of the battery pack, the controller do not respond to a configuration signal of the first working mode.

15. The power tool according to claim 12, wherein the configuration signal comprises a working mode configuration signal generated according to a switching instruction manually input by a user and a working mode configuration signal determined by the controller after identification of a preset physical quantity.
